(19) Europäisches Patentamt
European Patent Office
Office européen des brevets

(11) EP 3 623 451 B1

(12) # EUROPÄISCHE PATENTSCHRIFT

(45) Veröffentlichungstag und Bekanntmachung des Hinweises auf die Patenterteilung:
**20.01.2021 Patentblatt 2021/03**

(51) Int Cl.:
*C09K 19/60* (2006.01) *C09K 19/04* (2006.01)

(21) Anmeldenummer: **19200000.8**

(22) Anmeldetag: **26.11.2014**

(54) **VERBINDUNG**

COMPOUND

COMPOSÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2013 EP 13005935**
**15.01.2014 EP 14000141**

(43) Veröffentlichungstag der Anmeldung:
**18.03.2020 Patentblatt 2020/12**

(62) Dokumentnummer(n) der früheren Anmeldung(en) nach Art. 76 EPÜ:
**14805180.8 / 3 083 885**

(73) Patentinhaber: **Merck Patent GmbH**
**64293 Darmstadt (DE)**

(72) Erfinder:
- **Junge, Michael**
  **64319 PFUNGSTADT (DE)**
- **Beyer, Andreas**
  **63452 HANAU (DE)**
- **Patwal, Ursula**
  **64354 REINHEIM (DE)**
- **Kirsch, Peer**
  **64342 SEEHEIM-JUGENHEIM (DE)**
- **Gunst, Susann**
  **64283 DARMSTADT (DE)**

(56) Entgegenhaltungen:
**CN-A- 102 344 815**
**DE-A1- 10 135 247**
**DE-A1-102006 036 184**
**US-A- 6 033 598**
**US-A1- 2004 124 399**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Anmeldung betrifft Difluorodibenzofurane der Formel (I) wie in Anspruch 1 definiert, die Verwendung dieser Verbindungen in einem flüssigkristallinen Material, ein flüssigkristallines Material enthaltend die Verbindung der Formel (I) und zusätzlich ein oder mehrere mesogene Verbindungen, die Verwendung des flüssigkristallinen Materials in einer elektrooptischen Vorrichtung, sowie eine Vorrichtung zur Regulierung des Lichtdurchtritts, wobei die Vorrichtung eine Schicht umfasst, die das flüssigkristalline Material Unter dem Begriff Licht wird im Rahmen der vorliegenden Erfindung insbesondere elektromagnetische Strahlung im UV-A-, VIS-, sowie NIR-Bereich verstanden. Nochmals insbesondere wird darunter Licht einer Wellenlänge verstanden, welche von den üblicherweise in Fenstern verwendeten Materialien (z. B. Glas) nicht oder nur geringfügig absorbiert wird. Gemäß den üblicherweise verwendeten Definitionen wird unter dem UV-A-Bereich eine Wellenlänge von 320 bis 380 nm verstanden, unter dem VIS-Bereich eine Wellenlänge von 380 nm bis 780 nm verstanden und unter dem NIR-Bereich eine Wellenlänge von 780 nm bis 2000 nm verstanden.

Bevorzugt wird unter dem Licht, dessen Durchtritt von der erfindungsgemäßen Vorrichtung reguliert wird, Tageslicht verstanden. Tageslicht stellt Licht dar, welches von der Sonne ausgeht. Tageslicht geht bevorzugt direkt von der Sonne aus. Es kann jedoch auch über Spiegelung, Brechung, oder über Absorption und anschließende Emission durch beliebige Materialien indirekt von der Sonne ausgehen.

Unter einem flüssigkristallinen Material wird im Rahmen der vorliegenden Erfindung ein Material verstanden, das unter bestimmten Bedingungen flüssigkristalline Eigenschaften aufweist. Der Terminus flüssigkristalline Eigenschaften ist dem Fachmann geläufig und wird so verstanden wie auf dem Gebiet der physikalischen Chemie üblich. Im engeren Sinne wird darunter verstanden, dass das Material flüssig ist und richtungsabhängige Eigenschaften aufweist. Typischerweise sind die flüssigkristallinen Eigenschaften von der Temperatur abhängig. Im engeren Sinne wird daher unter einem flüssigkristallinen Material ein Material verstanden, das in einem Temperaturbereich, der die Raumtemperatur einschließt, flüssigkristalline Eigenschaften aufweist.

Vorrichtungen zur Regulierung des Lichtdurchtritts sind Schaltvorrichtungen, welche eine Fläche bedecken und den Durchtritt von Licht durch diese Fläche abhängig von ihrem Schaltzustand mehr oder weniger hindern.

Derartige Vorrichtungen können auf verschiedenen Mechanismen beruhen und können beispielsweise thermisch oder elektrisch schaltbar sein. Ein Beispiel für eine elektrisch schaltbare Vorrichtung zur Regulierung des Lichtdurchtritts ist in WO 2009/141295 und in den noch nicht offengelegten Anmeldungen WO 2014/090367 und WO 2014/090373 offenbart.

Die dort beschriebenen Vorrichtungen weisen eine Schicht enthaltend ein flüssigkristallines Material auf, wobei das flüssigkristalline Material mindestens eine Farbstoffverbindung und mindestens ein Hostmaterial aufweist. Das Hostmaterial ist eine Mischung aus unterschiedlichen flüssigkristallinen Verbindungen.

Im Stand der Technik werden beispielsweise weitere, strukturähnliche, Difluorodibenzofurane in der US 2004/124399 A1 oder der DE 10 2006 036184 A1 beschrieben.

Auch wenn die im oben genannten Stand der Technik offenbarten Vorrichtungen gut brauchbar sind und zufriedenstellende Eigenschaften aufweisen, besteht weiterhin Bedarf an alternativen Vorrichtungen. Insbesondere besteht Bedarf an Vorrichtungen, welche eine hohe Stabilität der Schicht enthaltend das flüssigkristalline Material und damit eine lange Lebensdauer haben. Insbesondere ist es erwünscht, dass das flüssigkristalline Material enthaltend den Farbstoff eine stabile Lösung darstellt, und/oder dass keine Kristallisation oder Bildung neuer Phasen im flüssigkristallinen Material, besonders bei tiefen Temperaturen, auftritt. Weiterhin ist es erwünscht, dass das flüssigkristalline Material der Vorrichtung eine hohe Anisotropie der Absorption aufweist.

Im Rahmen einer Ausführungsform der vorliegenden Erfindung wurde nun überraschend gefunden, dass bei Verwendung eines flüssigkristallinen Materials in der Vorrichtung, das einen Klärpunkt von mindestens 95°C aufweist, und das die unten abgebildeten charakteristischen Strukturmerkmale aufweist, Vorrichtungen mit sehr langer Lebensdauer und hoher Stabilität gegenüber niedrigen Temperaturen erhalten werden.

In einer Ausführungsformen enthalten die erfindungsgemäßen flüssigkristallinen Materialien einen oder mehrere Farbstoffverbindungen und zeichnen sich durch eine oder mehrere, bevorzugt alle der im folgenden genannten Eigenschaften aus: hohe Löslichkeit der Farbstoffverbindung, hohe Langzeitstabilität der Lösung bei Raumtemperatur und bei tiefen Temperaturen, und ein hoher Anisotropiegrad der Absorption.

Gegenstand einer Ausführungsform der vorliegenden Erfindung ist daher eine Vorrichtung zur Regulierung des Lichtdurchtritts, die dadurch gekennzeichnet ist, dass sie eine Schicht enthaltend ein flüssigkristallines Material enthaltend eine Farbstoffverbindung aufweist, wobei das flüssigkristalline Material einen Klärpunkt von mindestens 95°C hat und mindestens eine Verbindung V enthält, die mindestens eine Einheit gewählt aus Einheiten der Formeln (E-1), (E-2) und (E-3) umfasst

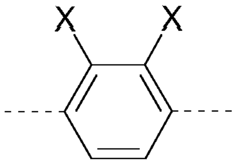

Formel (E-1)

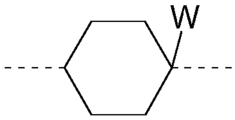

Formel (E-2)

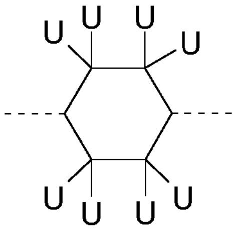

Formel (E-3),

wobei

X bei jedem Auftreten gleich oder verschieden gewählt ist aus F, Cl, Br, I, -CN, -NCO, -NCS, -SCN, -OCN, -NC, -CNO, -CNS und $N_3$;

W bei jedem Auftreten gleich oder verschieden gewählt ist aus F, Cl, Br, I, -CN, -NCO, -NCS, -SCN, -OCN, -NC, -CNO, -CNS und $N_3$;

U bei jedem Auftreten gleich oder verschieden gewählt ist aus H, F, Cl, Br, I, CN, -NCO, -NCS, -SCN, -OCN, -NC, -CNO, -CNS, $N_3$, und einer Alkyl-, Alkoxy- oder Alkylthiogruppe mit 1 bis 10 C-Atomen, wobei ein oder mehrere Wasserstoffatome in der Alkyl-, Alkoxy- oder Alkylthiogruppe durch F oder Cl ersetzt sein können, und wobei eine oder mehrere $CH_2$-Gruppen in der Alkyl-, Alkoxy- oder Alkylthiogruppe durch O oder S ersetzt sein können;

gestrichelte Linien Bindungen an den Rest der Verbindung symbolisieren,
und mindestens eine Gruppe U je Einheit der Formel (E-3) gewählt ist aus F, Cl, Br, I, CN, -NCO, -NCS, -SCN, -OCN, -NC, -CNO, -CNS und $N_3$.

Bevorzugt ist X bei jedem Auftreten gleich oder verschieden gewählt aus F und -CN.

Bevorzugt ist W gleich -CN.

Bevorzugt sind höchstens vier Gruppen U je Einheit der Formel (E-3) gewählt aus F, Cl, Br, I, CN, -NCO, -NCS, -SCN, -OCN, -NC, -CNO, -CNS und $N_3$, besonders bevorzugt höchstens zwei. Ganz besonders bevorzugt ist genau eine Gruppe U je Einheit der Formel (E-3) gewählt aus F, Cl, Br, I, CN, -NCO, -NCS, -SCN, -OCN, -NC, -CNO, -CNS und $N_3$. Weiterhin und bevorzugt in Kombination mit dieser bevorzugten Ausführungsform sind die verbleibenden Gruppen U in der Einheit der Formel (E-3) gleich H.

Bevorzugt ist U bei jedem Auftreten gleich oder verschieden gewählt aus H, F und CN.

Weiterhin ist es bevorzugt, dass die Verbindung V mindestens eine Einheit der Formel (E-1) enthält, besonders bevorzugt genau eine Einheit der Formel (E-1).

Es ist bevorzugt, dass die Verbindung V mindestens eine Einheit der Formel (E-2) enthält, besonders bevorzugt genau eine Einheit der Formel (E-2).

Weiterhin ist es bevorzugt, dass die Verbindung V genau eine Einheit gewählt aus Einheiten der Formel (E-1),(E-2) und (E-3) enthält. Besonders bevorzugt enthält die Verbindung V genau eine Einheit gewählt aus Einheiten der Formel (E-1) und (E-2).

Bevorzugte Ausführungsformen der Einheit der Formel (E-1) sind die im Folgenden genannten Einheiten der Formeln (E-1-1) bis (E-1-3)

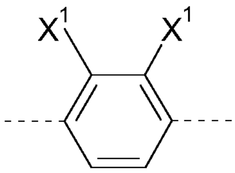

Formel (E-1-1)

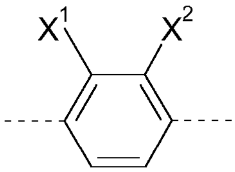

Formel (E-1-2)

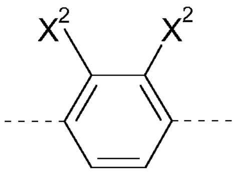

Formel (E-1-3),

wobei die gestrichelten Linien Bindungen an den Rest der Verbindung bezeichnen und weiterhin gilt:

$X^1$ ist bei jedem Auftreten gleich oder verschieden gewählt aus F, Cl, Br und I; und

$X^2$ ist bei jedem Auftreten gleich oder verschieden gewählt aus - CN, -NCO, -NCS, -SCN, -OCN, -NC, -CNO, -CNS und $N_3$.

$X^1$ ist bevorzugt gleich F.

$X^2$ ist bevorzugt gleich CN.

Besonders bevorzugte Ausführungsformen der Einheit der Formel (E-1) sind die im Folgenden genannten Einheiten der Formeln (E-1-1a) bis (E-1-3a)

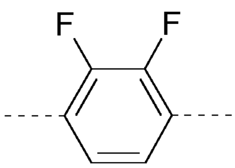

Formel (E-1-1a)

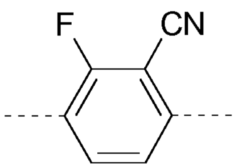

Formel (E-1-2a)

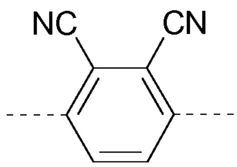

Formel (E-1-3a),

wobei die gestrichelten Linien Bindungen an den Rest der Verbindung bezeichnen.

Eine bevorzugte Ausführungsform der Einheit der Formel (E-2) ist die folgende Einheit der Formel (E-2-1)

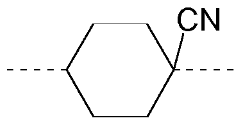

Formel (E-2-1),

wobei die gestrichelten Linien Bindungen an den Rest der Verbindung bezeichnen.

Eine bevorzugte Ausführungsform der Einheit der Formel (E-3) ist die folgende Einheit der Formel (E-3-1)

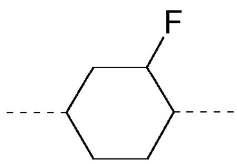

Formel (E-3-1),

wobei die gestrichelten Linien Bindungen an den Rest der Verbindung bezeichnen.

Die Verbindung V weist bevorzugt eine Struktur gemäß der folgenden Formel auf

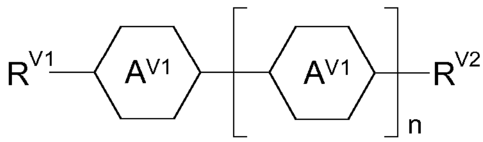

Formel (V),

wobei

$R^{V1}$,$R^{V2}$ bei jedem Auftreten gleich oder verschieden eine Alkyl- oder Alkoxygruppe mit 1 bis 10 C-Atomen oder eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können;

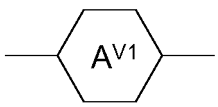

bei jedem Auftreten gleich oder verschieden ausgewählt ist aus den folgenden Gruppen

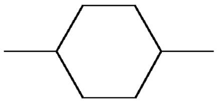 , 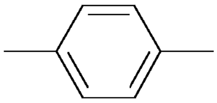 , 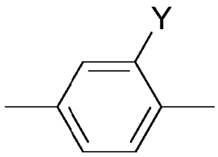 , 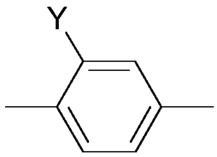 ,

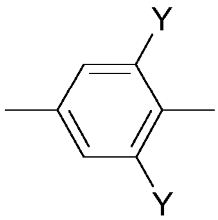 ,

oder Einheiten der Formel (E-1), (E-2) oder (E-3);

Y bei jedem Auftreten gleich oder verschieden gewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können;

n gleich 1, 2 oder 3 ist; und

wobei mindestens eine der Gruppen

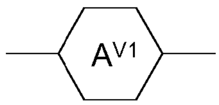

gewählt ist aus Einheiten der Formel (E-1), (E-2) oder (E-3).

Bevorzugt liegen die Einheiten der Formel (E-1) bzw. (E-2) bzw. (E-3) dabei in ihren bevorzugten Ausführungsformen vor, insbesondere in den Ausführungsformen entsprechend Formel (E-1-1a), (E-1-2a), (E-1-3a),(E-2-1) und (E-3-1).

Bevorzugt enthält die Verbindung der Formel (V) genau eine Einheit gewählt aus Einheiten der Formel (E-1),(E-2) und (E-3), besonders bevorzugt genau eine Einheit gewählt aus Einheiten der Formel (E-1) und (E-2).

In Formel (V) ist der Index n bevorzugt gleich 1 oder 2.

Ringe

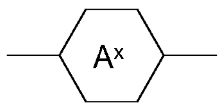 ,

beispielsweise

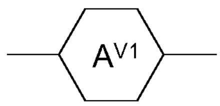 ,

werden in der vorliegenden Erfindung zur Verbesserung der Lesbarkeit im Fließtext als" $A^x$", beispielsweise "$A^{V1}$", abgekürzt.

Bevorzugt ist $A^{V1}$ bei jedem Auftreten gleich oder verschieden gewählt aus

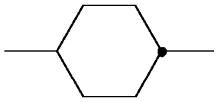 , 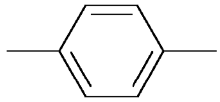 ,

und Einheiten der Formel (E-1-1a), (E-1-2a), (E-1-3a), (E-2-1) und (E-3-1).

Bevorzugte Ausführungsformen der Verbindung V entsprechen den folgenden Formeln (V-1) bis (V-8)

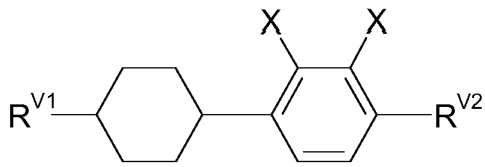

Formel (V-1)

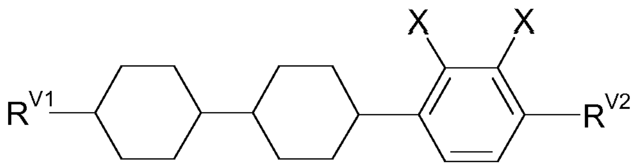

Formel (V-2)

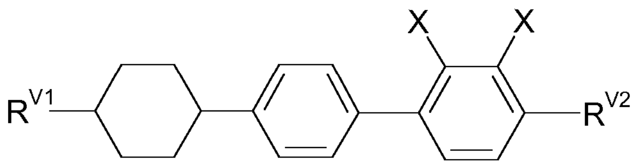

Formel (V-3)

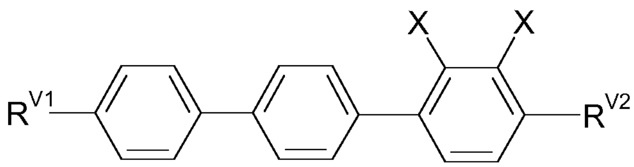

Formel (V-4)

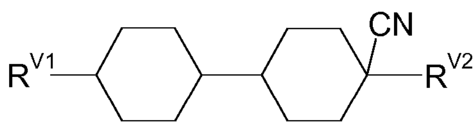

Formel (V-5)

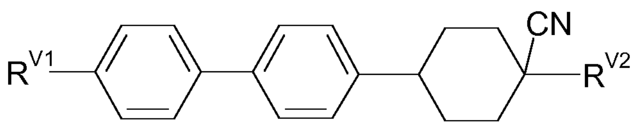

Formel (V-6)

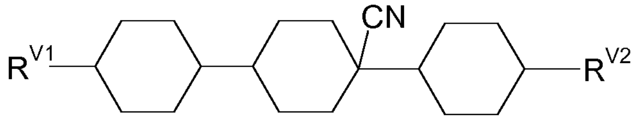

Formel (V-7)

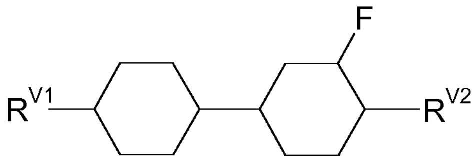

Formel (V-8),

wobei $R^{V1}$ und $R^{V2}$ und X definiert sind wie oben angegeben.

Bevorzugt sind für Verbindungen der Formeln (V-1) bis (V-8) die Gruppen $R^{V1}$ und $R^{V2}$ bei jedem Auftreten gleich oder verschieden gewählt aus Alkyl- oder Alkoxygruppen mit 1 bis 10 C-Atomen.

Bevorzugt ist für Verbindungen der Formeln (V-1) bis (V-4) die Gruppe X bei jedem Auftreten gleich oder verschieden gewählt aus F und CN. Besonders bevorzugt ist sie gleich F.

Das flüssigkristalline Material hat bevorzugt einen Klärpunkt von mindestens 100°C, besonders bevorzugt einen Klärpunkt von mindestens 105°C.

Weiterhin ist es bevorzugt, dass das flüssigkristalline Material mindestens in einem Temperaturbereich von -20°C bis 100°C, besonders bevorzugt mindestens in einem Temperaturbereich von -30°C bis 100°C, ganz besonders bevorzugt mindestens in einem Temperaturbereich von -40°C bis 105°C und am stärksten bevorzugt mindestens in einem Temperaturbereich von -50°C bis 105°C, nematisch flüssigkristallin ist.

Weiterhin ist es bevorzugt, dass das flüssigkristalline Material eine dielektrische Anisotropie $\Delta\varepsilon$ von -2 bis -10, bevorzugt von -3 bis -8, besonders bevorzugt von -4 bis -7 aufweist. Messverfahren für die dielektrische Anisotropie sind in den Ausführungsbeispielen angegeben.

Weiterhin bevorzugt hat das flüssigkristalline Material eine optische Anisotropie $\Delta n$ von 0.01 bis 0.3, besonders bevorzugt von 0.03 bis 0.20. Messverfahren für die optische Anisotropie sind in den Ausführungsbeispielen angegeben.

Weiterhin stellt das flüssigkristalline Material bevorzugt eine Mischung verschiedener organischer Verbindungen dar, die ihrerseits bevorzugt flüssigkristalline Eigenschaften aufweisen. Besonders bevorzugt enthält das flüssigkristalline Material 8 bis 30 verschiedene organische Verbindungen, ganz besonders bevorzugt 10 bis 25 verschiedene organische Verbindungen.

Die genannten organischen Verbindungen weisen bevorzugt eine langgestreckte Form auf, d.h. sie weisen in einer der drei Raumrichtungen eine deutlich größere Ausdehnung auf als in den beiden anderen Raumrichtungen.

Dem Fachmann sind eine Vielzahl von organischen Verbindungen bekannt, die diese Eigenschaften aufweisen. Besonders bevorzugt sind als Bestandteile des flüssigkristallinen Materials gemäß der vorliegenden Erfindung organische Verbindungen, die aus einer para-Verknüpfung von zwei oder mehr, bevorzugt zwei, drei oder vier Sechsringen, insbesondere Cyclohexanringen, Cyclohexenringen, Benzolringen, Pyridinringen, Pyrimidinringen und Tetrahydropyranringen, resultieren.

Die Verbindung V stellt bevorzugt eine solche, wie oben beschriebene organische Verbindung dar. Bevorzugt enthält das flüssigkristalline Material eine bis zwanzig Verbindungen V mit jeweils unterschiedlicher Struktur, besonders bevorzugt 5 bis 15 Verbindungen V mit jeweils unterschiedlicher Struktur.

Bevorzugt sind im flüssigkristallinen Material eine oder mehrere Verbindungen der folgenden Formel (F) enthalten

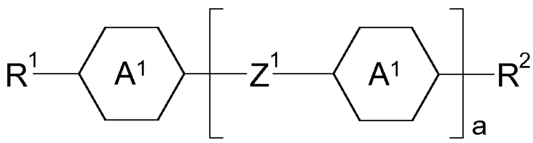

Formel (F)

wobei

$R^1$,$R^2$ bei jedem Auftreten gleich oder verschieden F, Cl, -CN, -NCS, -SCN, $R^3$-O-CO-, $R^3$-CO-O- oder eine Alkyl- oder Alkoxygruppe mit 1 bis 10 C-Atomen oder eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können; und

$R^3$ bei jedem Auftreten gleich oder verschieden eine Alkylgruppe mit 1 bis 10 C-Atomen darstellt, bei der ein oder mehrere Wasserstoffatome durch F oder Cl ersetzt sein können, und bei der eine oder mehrere $CH_2$-Gruppen durch O oder S ersetzt sein können; und

$A^1$ bei jedem Auftreten gleich oder verschieden ausgewählt ist aus einer der folgenden Gruppen

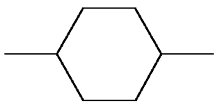 , 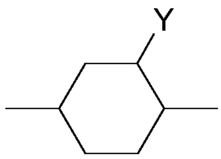 , 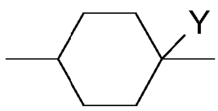 , 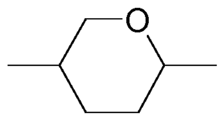 ,

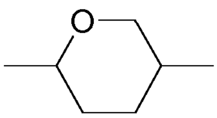 , 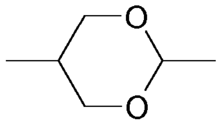 , 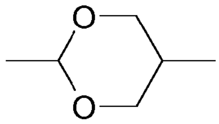 , 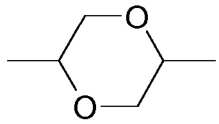 ,

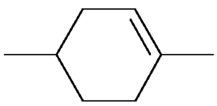 , 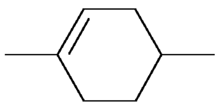 , 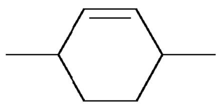 , 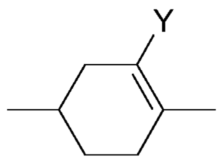 ,

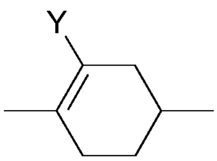 , 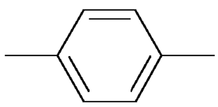 , 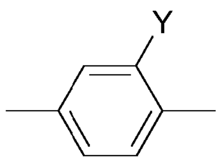 , 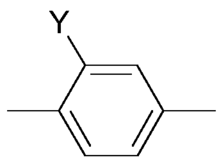 ,

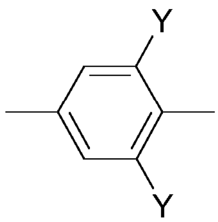 , 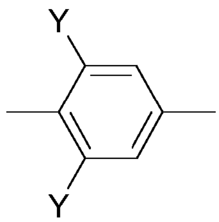 , 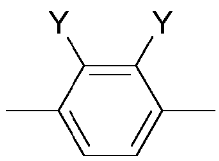 , 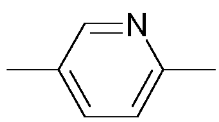 ,

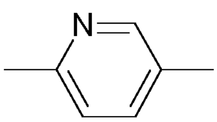 , 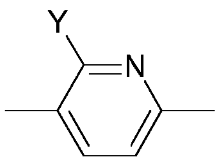 , 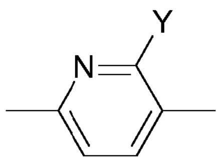 , 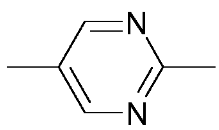 ,

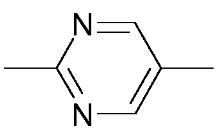 , 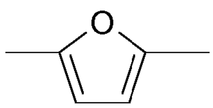 , 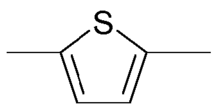 ,

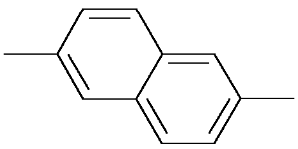 ,

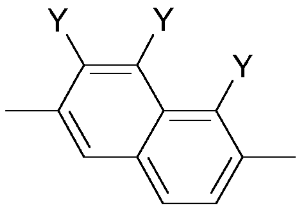 ,

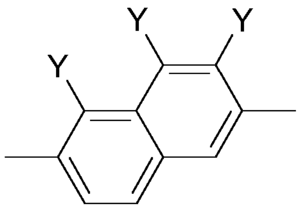 ,

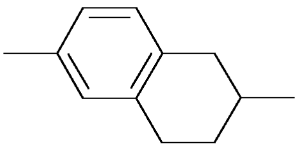 ,

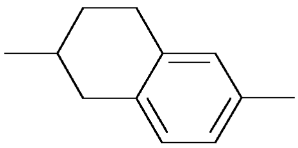 ,

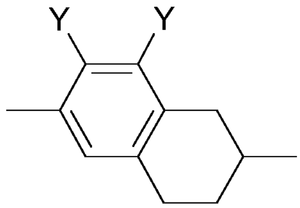 ,

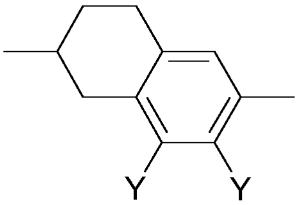 ,

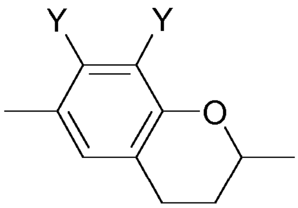 ,

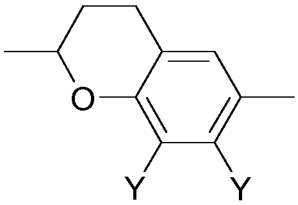 ,

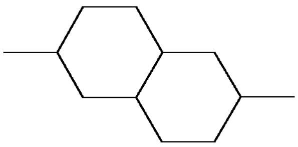 ,

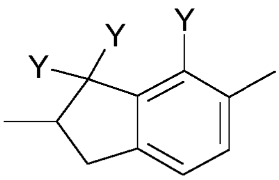 ,

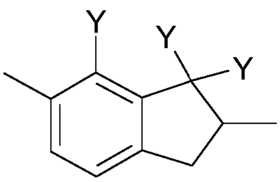 ,

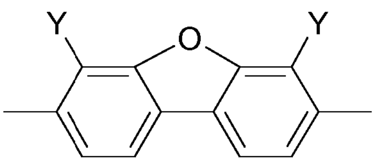 ,

und

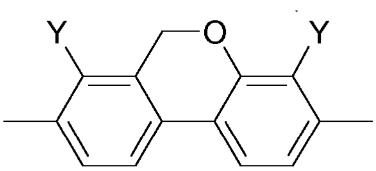 ,

wobei

Y bei jedem Auftreten gleich oder verschieden ausgewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können; und

$Z^1$ bei jedem Auftreten gleich oder verschieden ausgewählt ist aus -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C=C-, $-OCH_2-$, $-CH_2O-$, und einer Einfachbindung; und

a einen Wert von 0, 1, 2, 3, 4, 5 oder 6 hat, bevorzugt 0, 1, 2 oder 3, besonders bevorzugt 1, 2 oder 3.

Bevorzugt enthält das flüssigkristalline Material keine Verbindungen enthaltend Siloxangruppen, besonders bevorzugt keine Verbindungen enthaltend Silizium.

Weiterhin ist es bevorzugt, dass das flüssigkristalline Material einen Gesamtanteil von Verbindungen V von mindestens 40 Gew.-% aufweist, besonders bevorzugt von mindestens 50 Gew.-%, ganz besonders bevorzugt von mindestens 60 Gew.-%, und am stärksten bevorzugt von mindestens 70 Gew.-%.

Weiterhin ist es bevorzugt, dass das flüssigkristalline Material eine oder mehrere Verbindungen umfasst, die der Formel (F-1) entsprechen

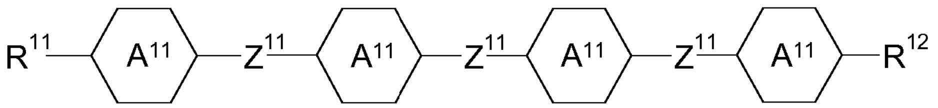 (F-1)

wobei

$R^{11}$, $R^{12}$ bei jedem Auftreten gleich oder verschieden F, Cl, -CN, -NCS, -SCN, $R^3$-O-CO- , $R^3$-CO-O- oder eine Alkyl- oder Alkoxygruppe mit 1 bis 10 C-Atomen oder eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können; und

$R^3$ bei jedem Auftreten gleich oder verschieden eine Alkylgruppe mit 1 bis 10 C-Atomen darstellt, bei der ein oder mehrere Wasserstoffatome durch F oder Cl ersetzt sein können, und bei der eine oder mehrere $CH_2$-Gruppen durch O oder S ersetzt sein können;

$Z^{11}$ bei jedem Auftreten gleich oder verschieden ausgewählt ist aus -CO-O-, -O-CO-, $-CF_2-CF_2-$, $-CF_2-O-$, $-O-CF_2-$, $-CH_2-CH_2-$, -CH=CH-, -CF=CF-, -CF=CH-, -CH=CF-, -C=C-, $-OCH_2-$, $-CH_2O-$, und einer Einfachbindung; und

$A^{11}$ bei jedem Auftreten gleich oder verschieden ausgewählt ist aus den folgenden Gruppen

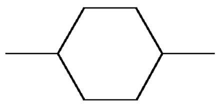 , 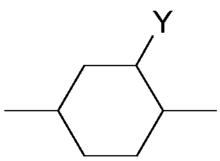 , 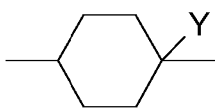 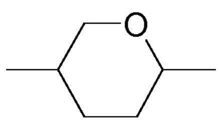 ,

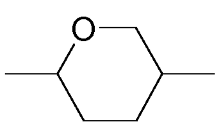 , 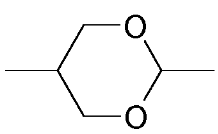 , 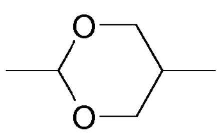 , 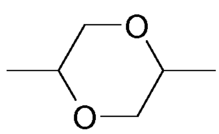 ,

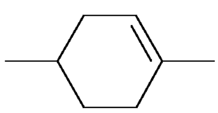 , 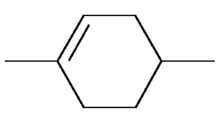 , 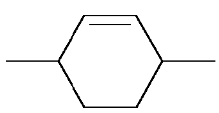 , 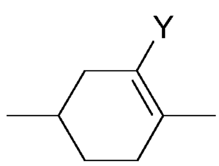 ,

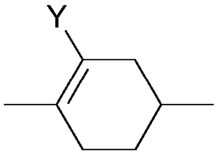 , 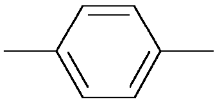 , 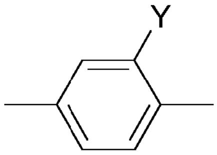 , 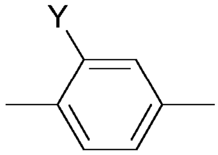 ,

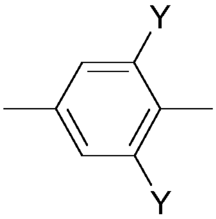 , 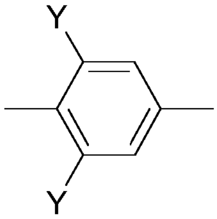 , 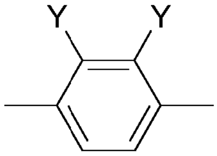 , 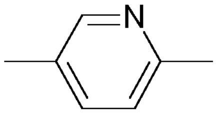 ,

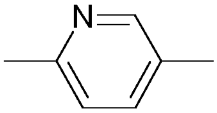 , 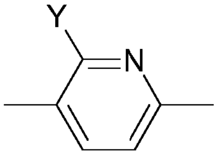 , 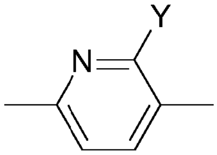 , 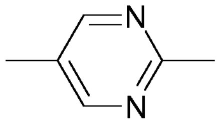 ,

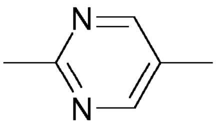 , 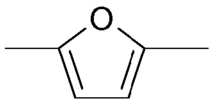 , 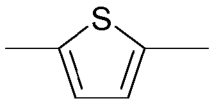 ,

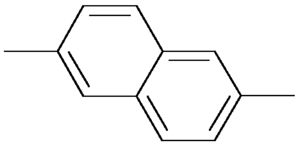 , 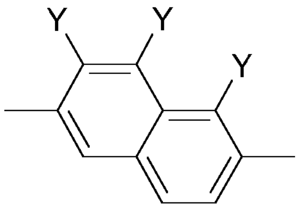 , 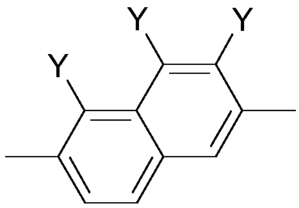 ,

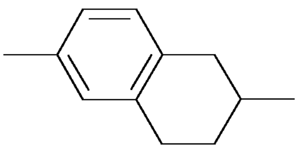 , 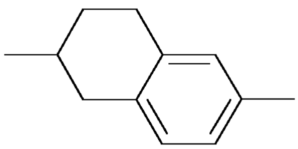 , 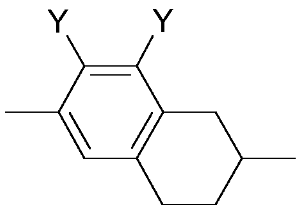 ,

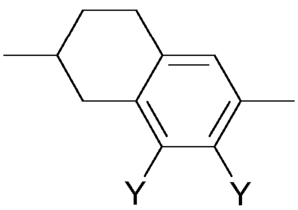 , 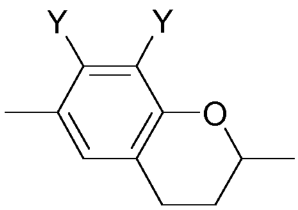 , 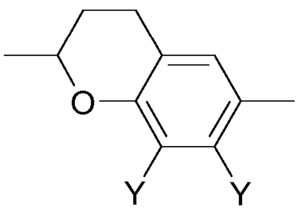 ,

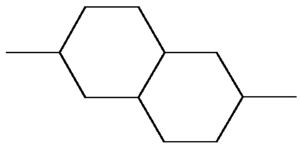 , 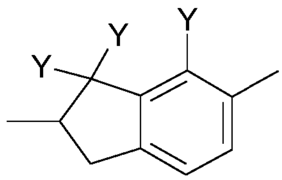 ,

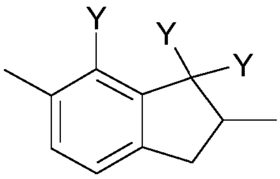 , 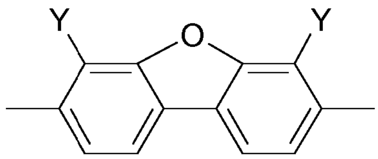 ,

und

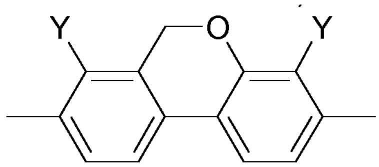 ,

wobei

Y bei jedem Auftreten gleich oder verschieden gewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können.

$R^{11}$, $R^{12}$ sind bevorzugt bei jedem Auftreten gleich oder verschieden Alkylgruppen mit 1 bis 10 C-Atomen.

$Z^{11}$ ist bevorzugt bei jedem Auftreten gleich oder verschieden ausgewählt aus -CO-O-, -O-CO- und einer Einfachbindung.

$A^{11}$ ist bevorzugt bei jedem Auftreten gleich oder verschieden gewählt aus

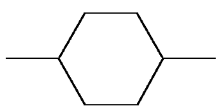 , 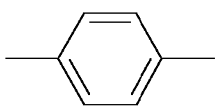 , 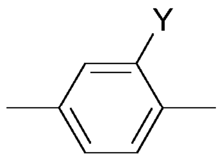 ,

und

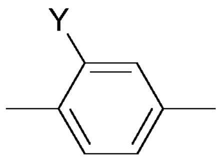 ,

wobei
Y definiert ist wie oben und bevorzugt gleich F oder CN ist.

Besonders bevorzugte Verbindungen der Formel (F-1) entsprechen den folgenden Formeln

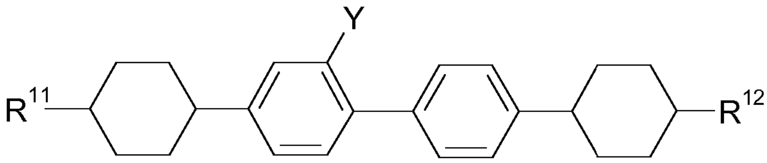

Formel (F-1-1)

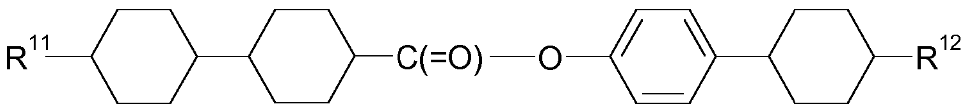

Formel (F-1-2)

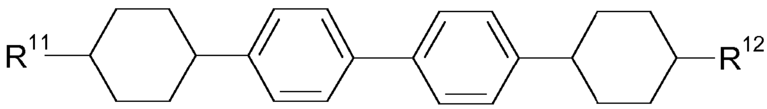

Formel (F-1-3)

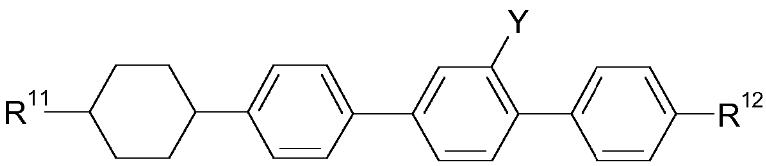

Formel (F-1-4),

wobei Y definiert ist wie oben und bevorzugt gleich F ist.

Das flüssigkristalline Material enthält bevorzugt in einem Gesamtanteil von 0 Gew.-% bis 30 Gew.-%, besonders bevorzugt 5 Gew.-% bis 25 Gew.-% und ganz besonders bevorzugt 10 Gew.-% bis 20 Gew.-% Verbindung(en) der Formel (F-1).

Bevorzugt enthält das flüssigkristalline Material mindestens eine Verbindung V, welche eine Einheit der Formel (E-2) umfasst, und mindestens eine Verbindung der Formel (F-1). Bevorzugt enthält das flüssigkristalline Material in einem Gesamtanteil von mindestens 10 Gew.-%, besonders bevorzugt von mindestens 20 Gew.-%, ganz besonders bevorzugt von mindestens 30 Gew.-%, stärker bevorzugt von mindestens 40 Gew.-% und am stärksten bevorzugt von mindestens 50 Gew.-%, Verbindungen, die gewählt sind aus Verbindung(en) V, welche mindestens eine Einheit der Formel (E-2) umfassen, und Verbindung(en) der Formel (F-1).

Weiterhin ist es bevorzugt, dass das flüssigkristalline Material eine oder mehrere Verbindungen umfasst, die der Formel (F-2) entsprechen

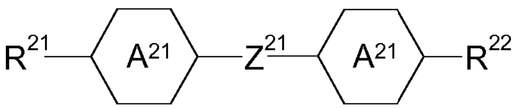 (F-2)

wobei

$R^{21}$ definiert ist wie $R^{11}$ oben;

$R^{22}$ definiert ist wie $R^{12}$ oben;

$Z^{21}$ definiert ist wie $Z^{11}$ oben; und

$A^{21}$ definiert ist wie $A^{11}$ oben.

$R^{21}$, $R^{22}$ sind bevorzugt bei jedem Auftreten gleich oder verschieden Alkylgruppen mit 1 bis 10 C-Atomen oder Alkoxygruppen mit 1 bis 10 C-Atomen.

$Z^{21}$ ist bevorzugt eine Einfachbindung.

$A^{21}$ ist bevorzugt bei jedem Auftreten gleich oder verschieden gewählt aus

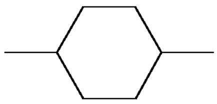
und
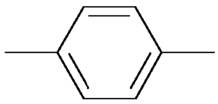
.

Besonders bevorzugte Verbindungen der Formel (F-2) entsprechen den folgenden Formeln (F-2-1) und (F-2-2)

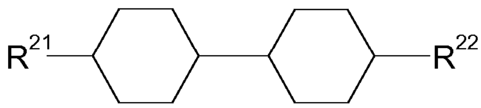

Formel (F-2-1)

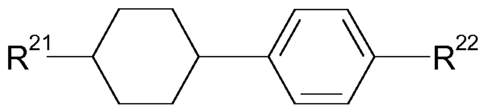

Formel (F-2-2)

Das flüssigkristalline Material enthält bevorzugt in einem Gesamtanteil von 0 Gew.-% bis 30 Gew.-%, besonders bevorzugt 3 Gew.-% bis 20 Gew.-% und ganz besonders bevorzugt 5 Gew.-% bis 15 Gew.-% Verbindung(en) der Formel (F-2).

Es ist erfindungsgemäß bevorzugt, dass das erfindungsgemäße flüssigkristalline Material einen oder mehrere chirale Dotierstoffe enthält. Bevorzugt liegen in diesem Fall die Moleküle des flüssigkristallinen Materials in der Schicht der erfindungsgemäßen Vorrichtung gegeneinander verdrillt vor, besonders bevorzugt wie aus dem TN-Modus von Displays bekannt.

Gemäß einer alternativen, ebenfalls bevorzugten Ausführungsform, enthält das erfindungsgemäße flüssigkristalline Material keine chiralen Dotierstoffe. Bevorzugt liegen in diesem Fall in der LC-Vorrichtung des Gast-Wirt-Typs die Moleküle des flüssigkristallinen Materials nicht gegeneinander verdrillt vor. Besonders bevorzugt liegt in diesem Fall die LC-Vorrichtung im antiparallelen Modus vor.

Chirale Dotierstoffe werden in dem erfindungsgemäßen flüssigkristallinen Material bevorzugt in einer Gesamtkonzentration von 0.01 Gew.-% bis 3 Gew.-%, besonders bevorzugt von 0.05 Gew.-% bis 1 Gew.-% verwendet. Um hohe Werte für die Verdrillung zu erhalten, kann die Gesamtkonzentration der chiralen Dotierstoffe auch höher als 3 Gew.-% gewählt werden, bevorzugt bis maximal 10 Gew.-%.

Die Anteile dieser Verbindungen und anderer Mindermengenkomponenten werden bei der Angabe der Anteile der flüssigkristallinen Verbindungen und der Farbstoffverbindungen vernachlässigt.

Bevorzugte Dotierstoffe sind die in der folgenden Tabelle abgebildeten Verbindungen:

| |
|---|
| 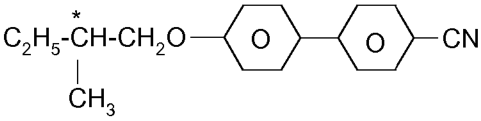 |
| |

| |
|---|
| 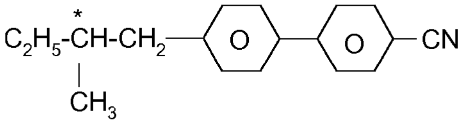 |
| |
| 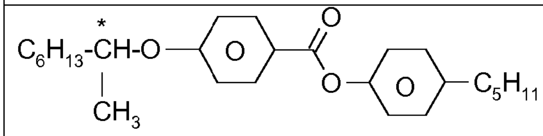 |
| |
| 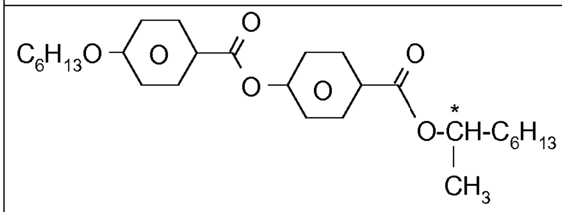 |
| |
| 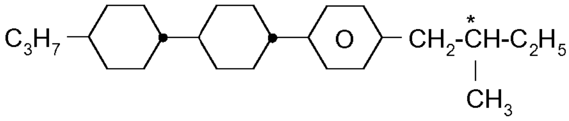 |
| |
| 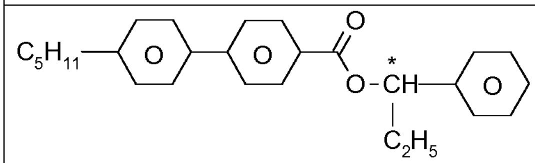 |
| |
| 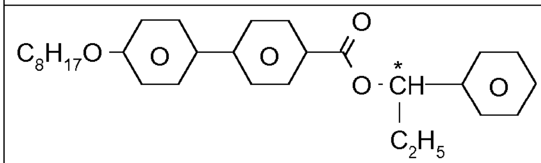 |
| |
| 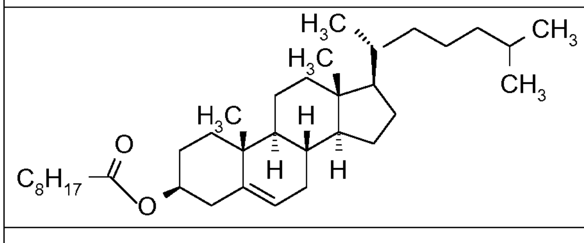 |
| |
| 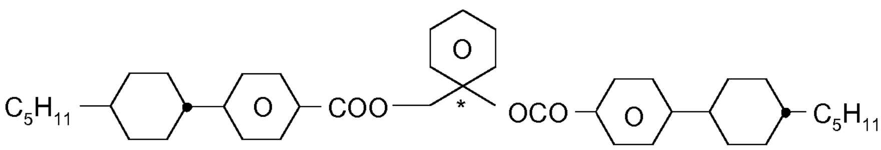 |

| |
|---|
| 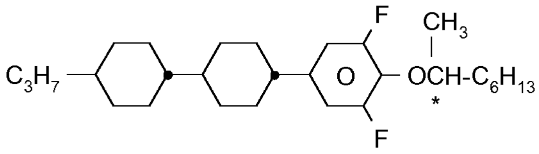 |
| |
| 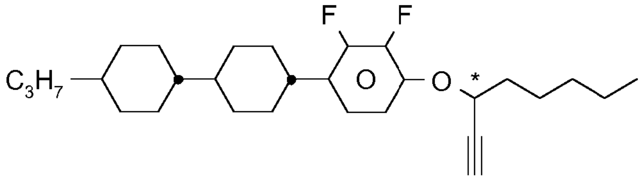 |
| |
| 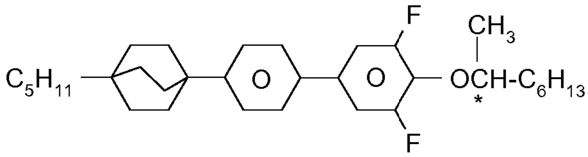 |
| |
| 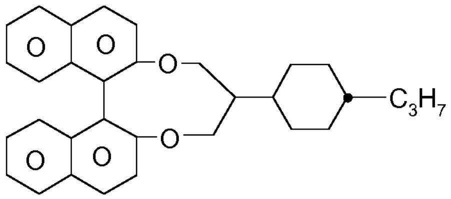 |

Das erfindungsgemäße flüssigkristalline Material enthält weiterhin bevorzugt einen oder mehrere Stabilisatoren. Die Gesamtkonzentration der Stabilisatoren liegt bevorzugt zwischen 0.00001 Gew.-% und 10 Gew.-%, besonders bevorzugt zwischen 0.0001 Gew.-% und 1 Gew.-% der Gesamtmischung.

Bevorzugte Stabilisatoren sind in der folgenden Tabelle gezeigt:

| | |
|---|---|
| 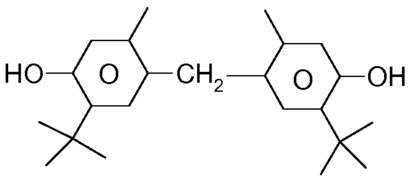 | 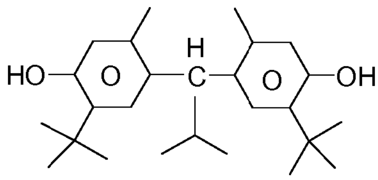 |

| | |
|---|---|
| 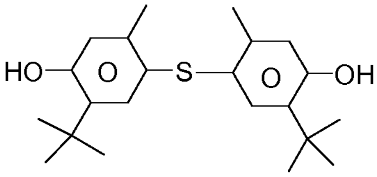 | 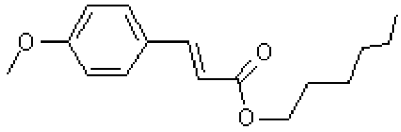 |
| 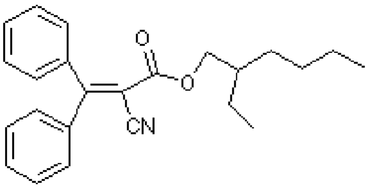 | 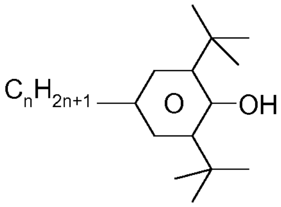 |
| 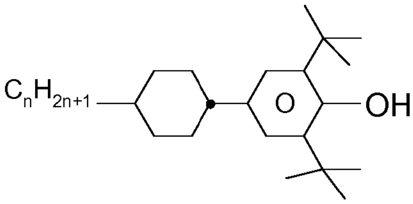 | 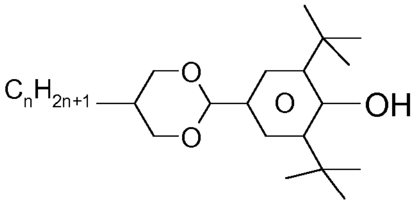 |
| 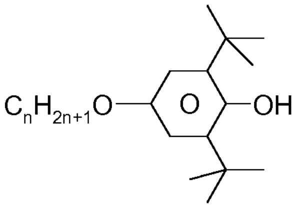 | 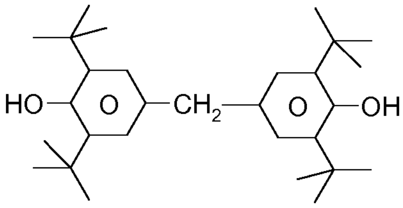 |
| 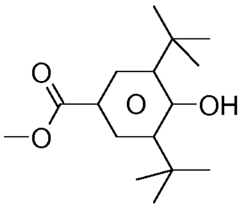 | 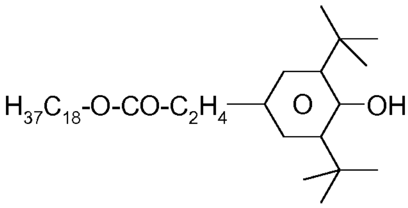 |
| 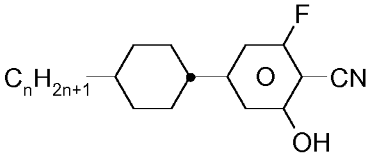 | 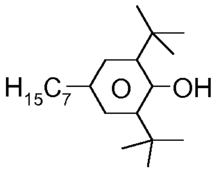 |

| | |
|---|---|
| 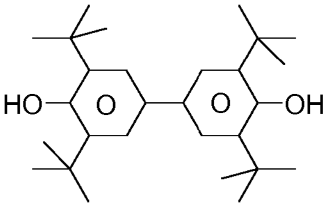 | 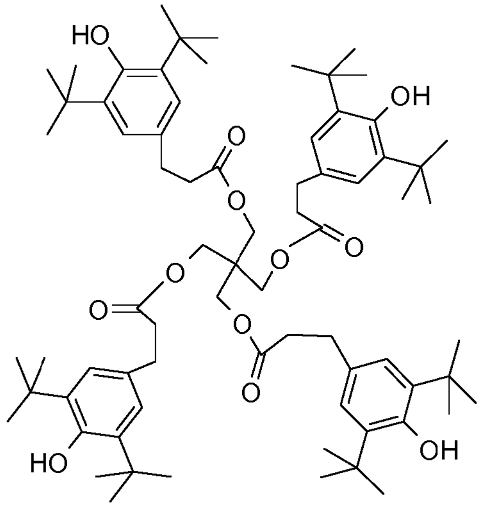 |
| 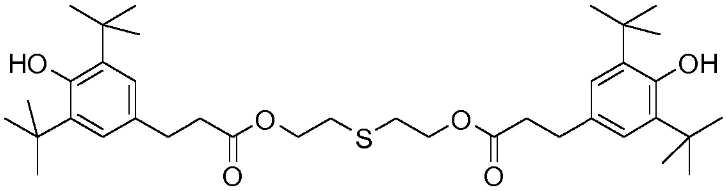 | |
| 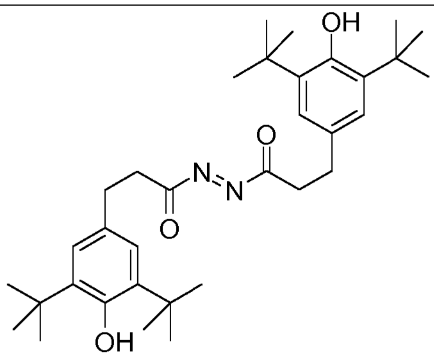 | 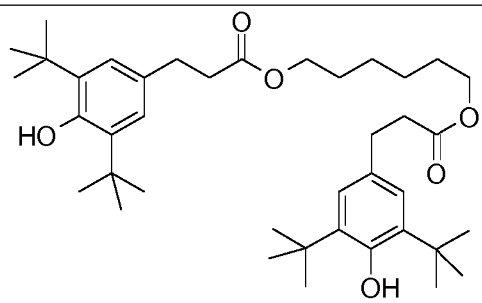 |
| 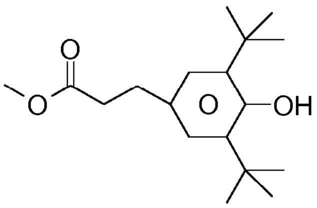 | 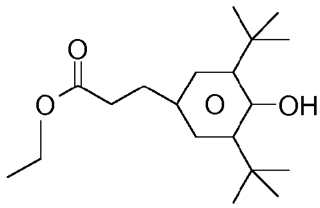 |
| 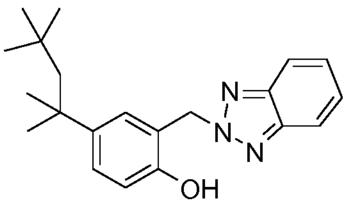 | 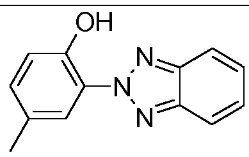 |

| | |
|---|---|
| 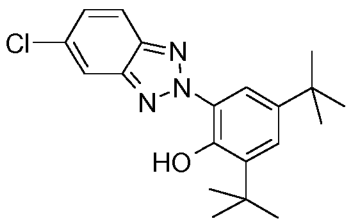 | 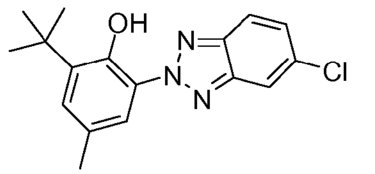 |
| 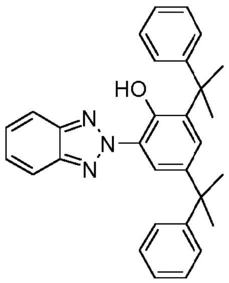 | 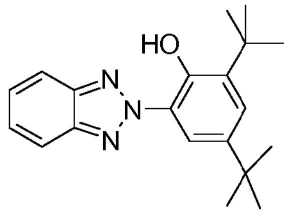 |
| 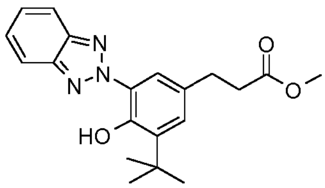 | 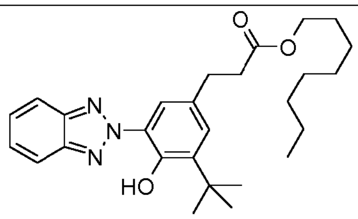 |
| 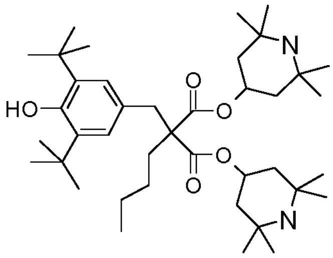 | 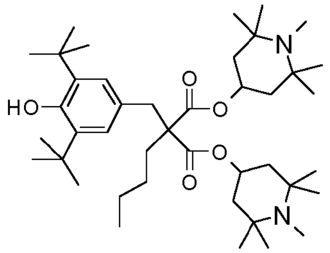 |
| 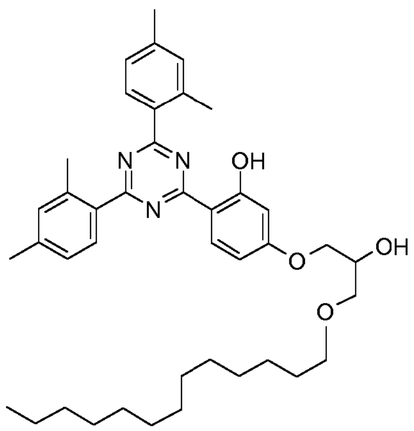 | 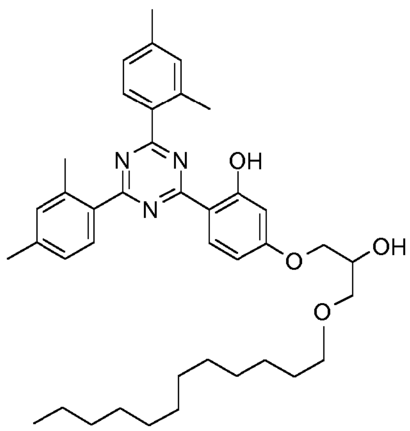 |

| | |
|---|---|
| 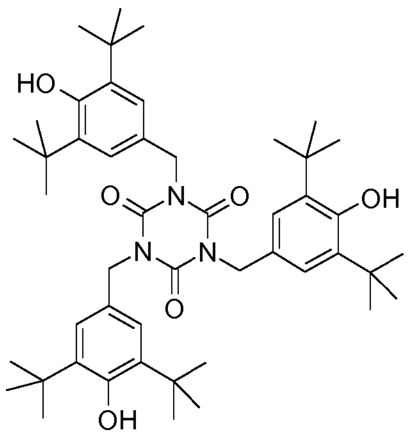 | 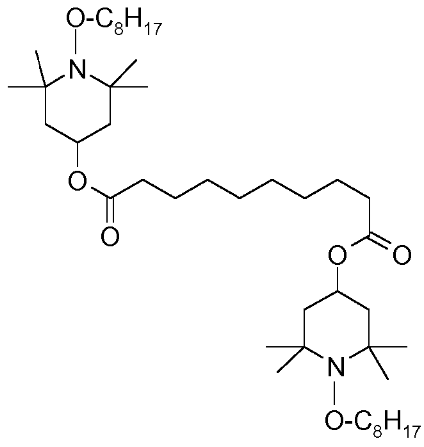 |
| 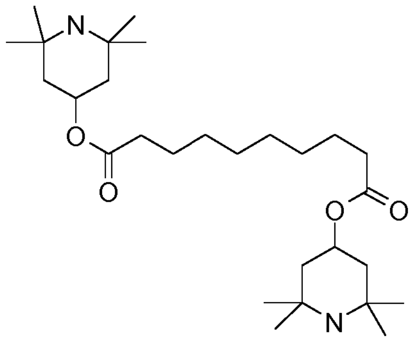 | 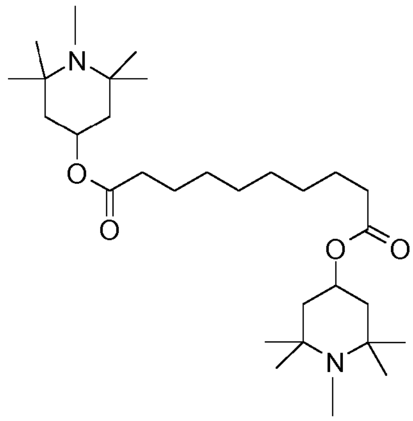 |
| 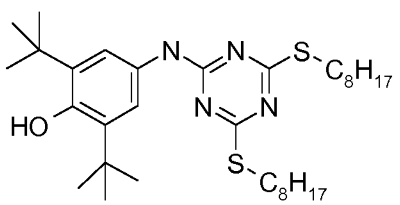 | 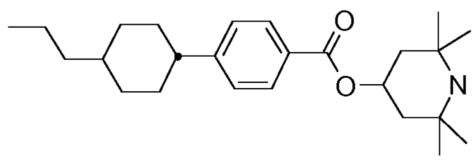 |
| 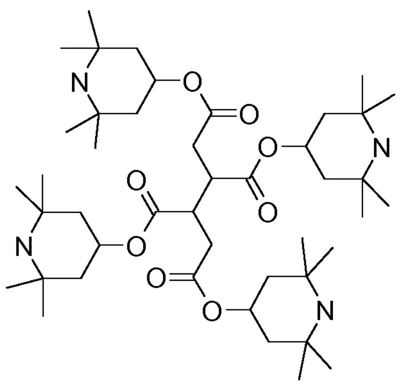 | 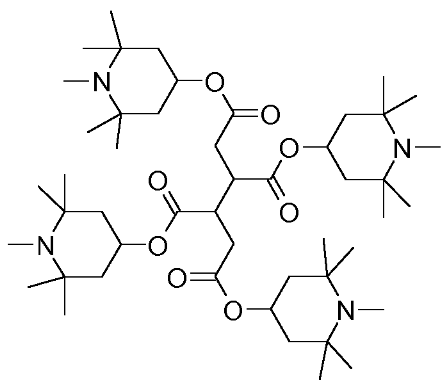 |

| | |
|---|---|
| 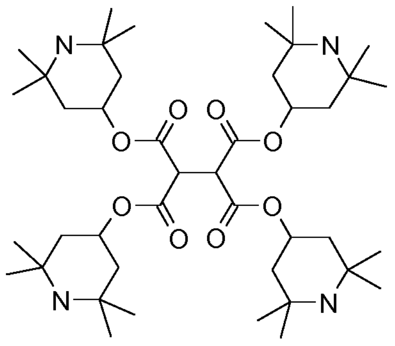 | 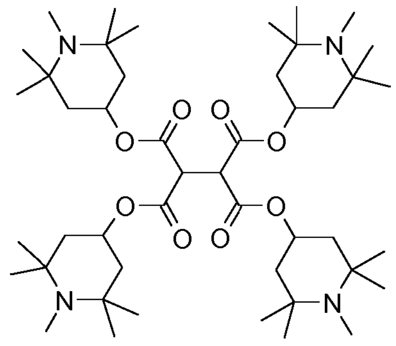 |

Gemäß einer Ausführungsform enthält das flüssigkristalline Material eine oder mehrere Farbstoffverbindungen. Die Farbstoffverbindungen sind bevorzugt organische Verbindungen, besonders bevorzugt organische Verbindungen enthaltend mindestens eine kondensierte Aryl- oder Heteroarylgruppe.

Bevorzugt enthält das erfindungsgemäße flüssigkristalline Material mindestens zwei, besonders bevorzugt mindestens drei und ganz besonders bevorzugt drei oder vier verschiedene Farbstoffverbindungen. Bevorzugt decken die mindestens zwei Farbstoffverbindungen jeweils verschiedene Bereiche des Lichtspektrums ab.

Wenn zwei oder mehr Farbstoffverbindungen im flüssigkristallinen Material vorliegen, ergänzen sich die Absorptionsspektren der Farbstoffverbindungen bevorzugt derart, dass im Wesentlichen das gesamte sichtbare Spektrum des Lichts absorbiert wird. Dadurch entsteht für das menschliche Auge der Eindruck von schwarzer Farbe. Bevorzugt wird dies dadurch erreicht, dass drei oder mehr Farbstoffverbindungen verwendet werden, von denen mindestens eine blaues Licht absorbiert, mindestens eine grünes bis gelbes Licht absorbiert, und mindestens eine rotes Licht absorbiert. Lichtfarbe ist dabei entsprechend B. Bahadur, Liquid Crystals - Applications and Uses, Vol. 3, 1992, World Scientific Publishing, Abschnitt 11.2.1. Es wird darauf hingewiesen, dass die wahrgenommene Farbe der Farbstoffverbindung jeweils die Komplementärfarbe zur absorbierten Farbe darstellt, dass also eine blaues Licht absorbierende Farbstoffverbindung eine gelbe Farbe aufweist.

Der Anteil der Farbstoffverbindung(en) im flüssigkristallinen Material beträgt bevorzugt insgesamt 0.01 bis 10 Gew.-%, besonders bevorzugt 0.1 bis 7 Gew.-% und ganz besonders bevorzugt 0.2 bis 7 Gew.-%. Der Anteil einer einzelnen Farbstoffverbindung beträgt bevorzugt 0.01 bis 10 Gew.-%, besonders bevorzugt 0.05 bis 7 Gew.-% und ganz besonders bevorzugt 0.1 bis 7 Gew.-%.

Die im flüssigkristallinen Material enthaltene Farbstoffverbindung ist bevorzugt in diesem gelöst. Die Farbstoffverbindung wird bevorzugt in ihrer Ausrichtung durch die Ausrichtung der Moleküle des flüssigkristallinen Materials beeinflusst.

Weiterhin bevorzugt sind die Farbstoffverbindungen dichroitische Farbstoffverbindungen, besonders bevorzugt positiv dichroitische Farbstoffverbindungen. Unter positiv dichroitisch wird verstanden, dass die Farbstoffverbindung einen positiven Anisotropiegrad R, ermittelt wie in den Ausführungsbeispielen angegeben, aufweist. Besonders bevorzugt ist der Anisotropiegrad R größer als 0.4, ganz besonders bevorzugt größer als 0.5 und am stärksten bevorzugt größer als 0.6.

Bevorzugt erreicht die Absorption der Farbstoffverbindung ein Maximum, wenn die Polarisationsrichtung des Lichts parallel zur Richtung der längsten Ausdehnung des Moleküls der Farbstoffverbindung ist, und sie erreicht ein Minimum, wenn die Polarisationsrichtung des Lichts senkrecht zur Richtung der längsten Ausdehnung des Moleküls der Farbstoffverbindung ist.

Weiterhin bevorzugt absorbiert die Farbstoffverbindung gemäß der vorliegenden Erfindung vorwiegend Licht im UV-VIS-NIR-Bereich, d. h. in einem Wellenlängenbereich von 320 bis 2000 nm.

Weiterhin bevorzugt ist die Farbstoffverbindung eine fluoreszierende Farbstoffverbindung. Unter Fluoreszenz wird dabei verstanden, dass eine Verbindung durch Absorption von Licht einer bestimmten Wellenlänge in einen elektronisch angeregten Zustand versetzt wird, wobei die Verbindung anschließend unter Emission von Licht in den Grundzustand übergeht. Bevorzugt hat das emittierte Licht längere Wellenlänge als das absorbierte Licht. Weiterhin bevorzugt ist der Übergang vom angeregten Zustand in den Grundzustand spin-erlaubt, erfolgt also ohne Änderung des Spins. Weiterhin bevorzugt ist die Lebensdauer des angeregten Zustands der fluoreszierenden Verbindung kürzer als $10^{-5}$ s, besonders bevorzugt kürzer als $10^{-6}$ s, ganz besonders bevorzugt zwischen $10^{-9}$ und $10^{-7}$ s.

Weiterhin bevorzugt ist die Farbstoffverbindung gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der Tabelle aufgeführten expliziten Verbindungen.

Bevorzugt ist die Farbstoffverbindung gewählt aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Benzothiadiazolen, Pyrromethenen und Diketopyrrolopyrrolen. Besonders bevorzugt sind darunter Perylene, Benzothiadiazole und Diketopyrrolopyrrole.

Die genannten Farbstoffverbindungen sind vielfach in der Literatur beschrieben. So sind z.B. Anthrachinonfarbstoffe beschrieben in EP 34832, EP 44893, EP 48583, EP 54217, EP 56492, EP 59036, GB 2065158, GB 2065695, GB 2081736, GB 2082196, GB 2094822, GB 2094825, JP-OS 55-123673, DE 3017877, DE 3040102, DE 3115147, DE 3115762, DE 3150803 und DE 3201120, Naphthochinonfarbstoffe beschrieben in DE 3126108 und DE 3202761, Azofarbstoffe in EP 43904, DE 3123519, WO 82/2054, GB 2079770, JP-OS 56-57850, JP-OS 56-104984, US 4308161, US 4308162, US 4340973, T. Uchida, C. Shishido, H. Seki und M. Wada: Mol. Cryst. Lig. Cryst. 39, 39-52 (1977) und H. Seki, C. Shishido, S. Yasui und T. Uchida: Jpn. J. Appl. Phys. 21, 191-192 (1982), und Perylene beschrieben in EP 60895, EP 68427 und WO 82/1191.

Besonders bevorzugt sind Anthrachinon-Farbstoffe, Azofarbstoffe und Naphthochinon-Farbstoffe, wie beispielsweise im Detail in DE 3307238 offenbart, und Rylen-Farbstoffe, wie beispielsweise in EP 2166040, US 2011/0042651, EP 68427, EP 47027, EP 60895, DE 3110960 und EP 698649 offenbart, und Benzothiadiazol-Farbstoffe, wie beispielsweise in der noch nicht offengelegten Anmeldung EP13002711.3 offenbart.

Beispiele für bevorzugte Farbstoffverbindungen sind in der folgenden Tabelle abgebildet:

| |
|---|
| 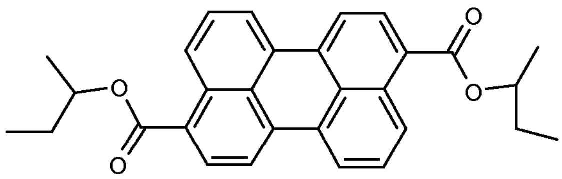 |
| |
| 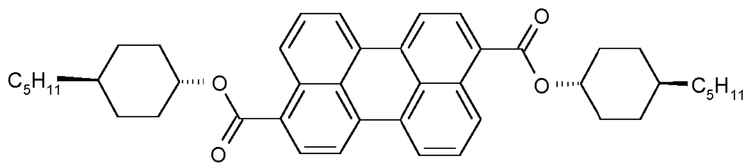 |
| |
| 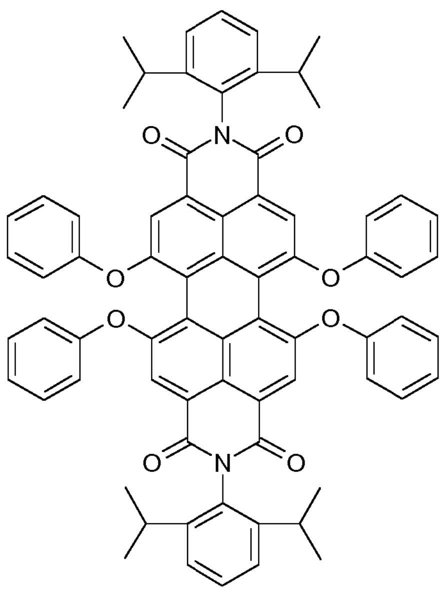 |

(fortgesetzt)

| |
|---|
| 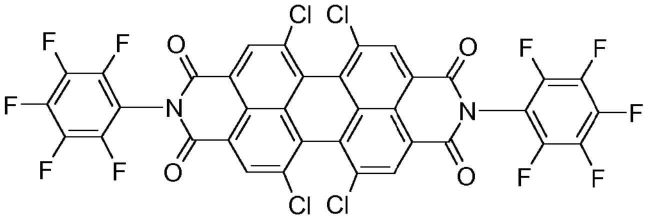 |
| |
| 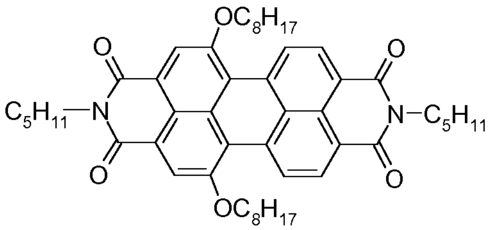 |
| |
| 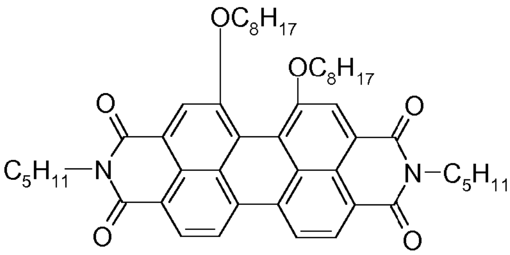 |
| |
| 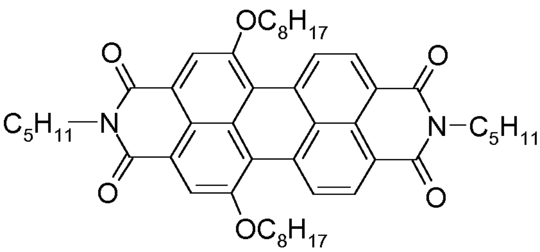 |
| |
| 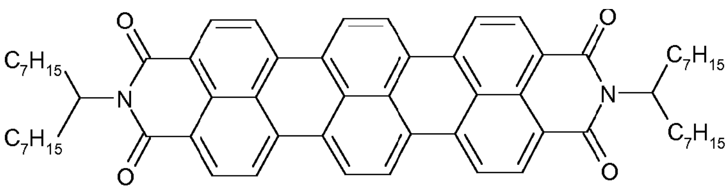 |
| |
| 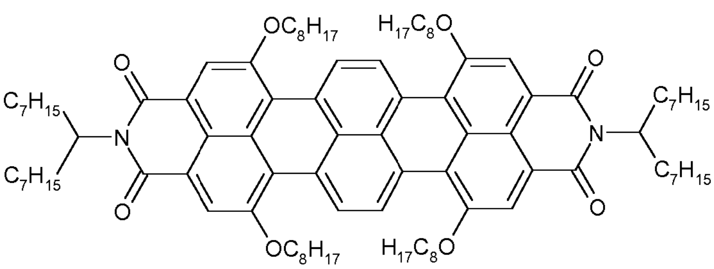 |

(fortgesetzt)

| |
|---|
| 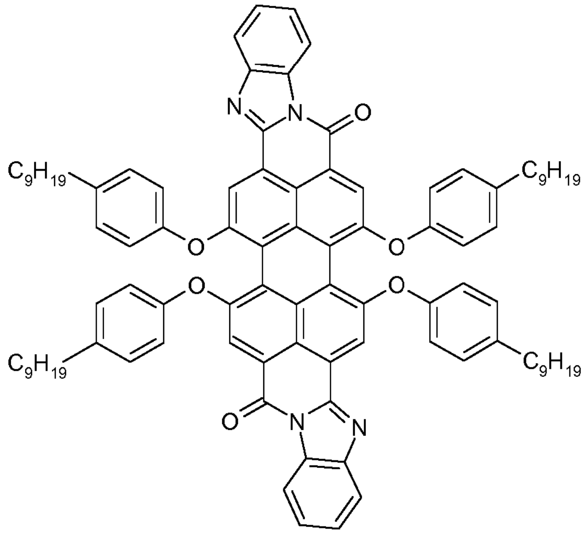 |
| |
| 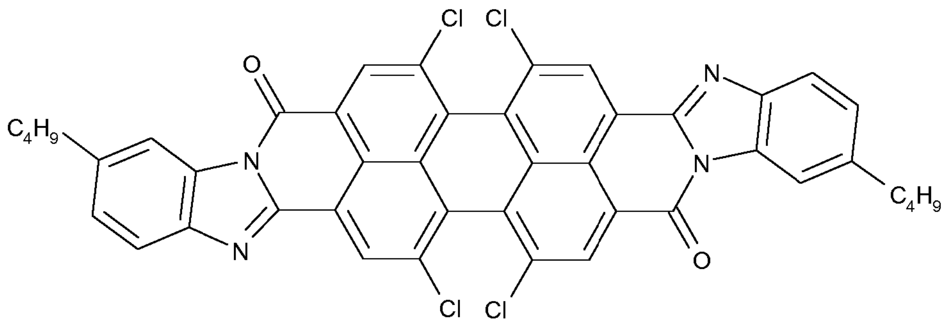 |
| |
| 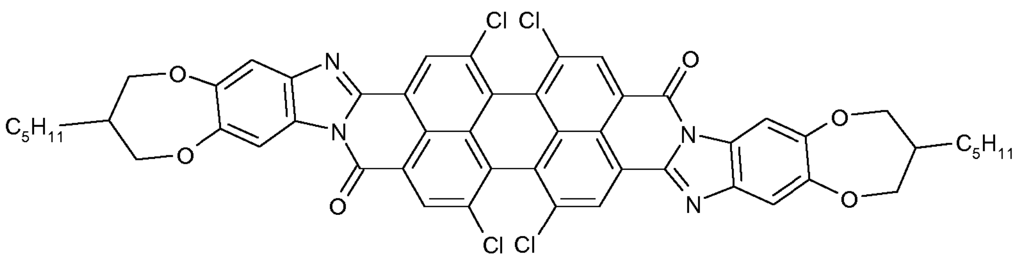 |
| |
| 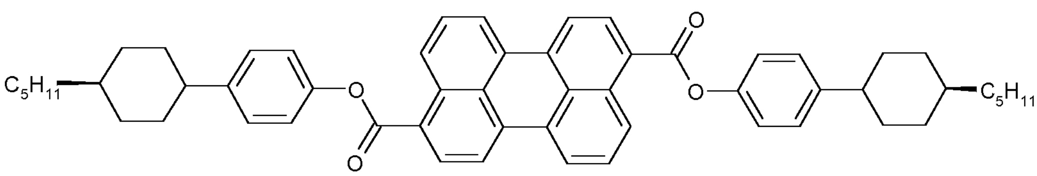 |

(fortgesetzt)

| |
|---|
| 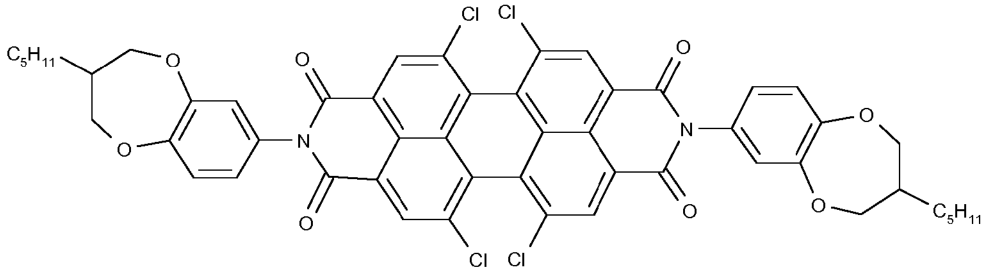 |
| |
| 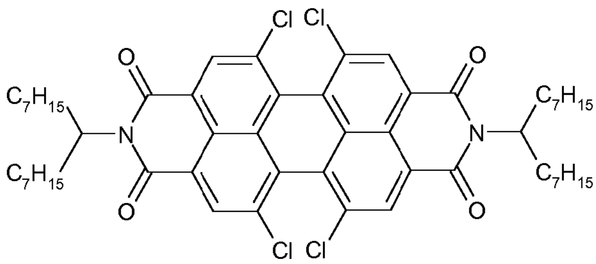 |
| |
| 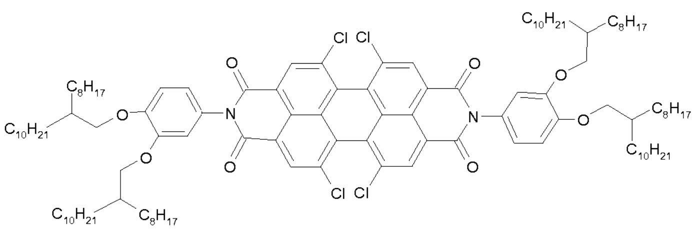 |
| |
| 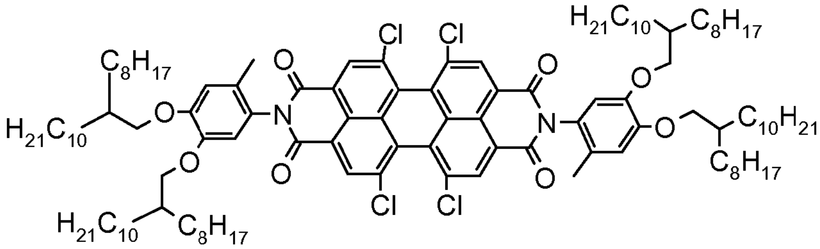 |
| |
| 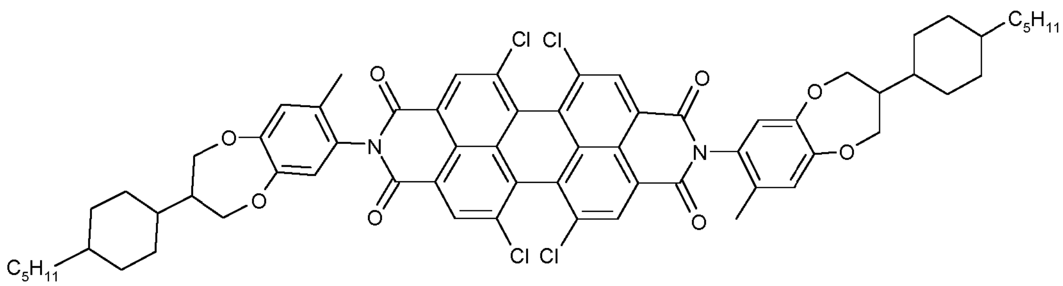 |
| |

(fortgesetzt)

| |
|---|
| 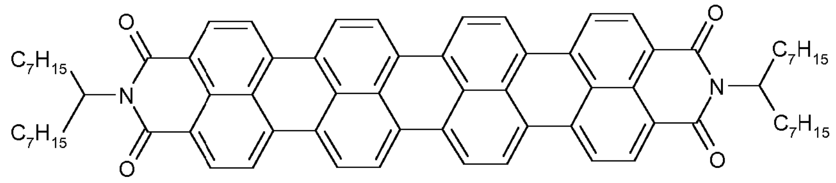 |
| |
| 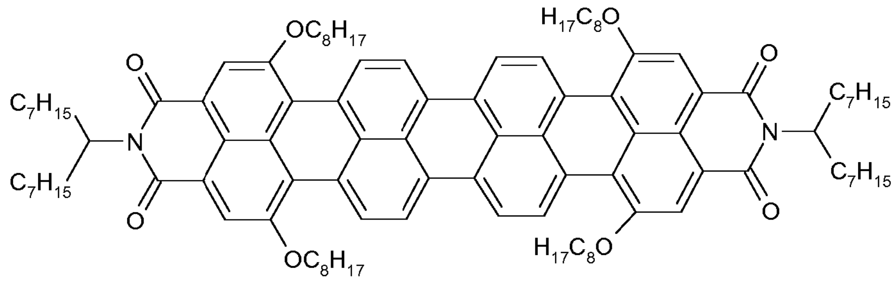 |
| |
| 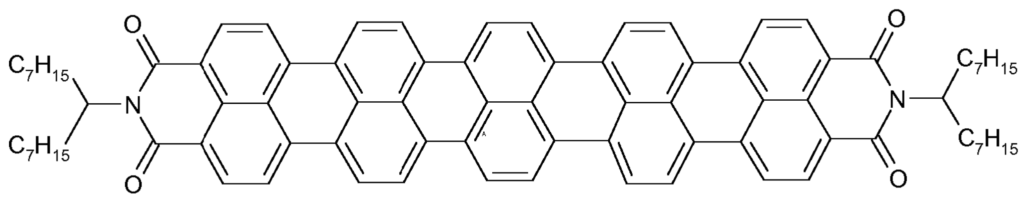 |
| |
| 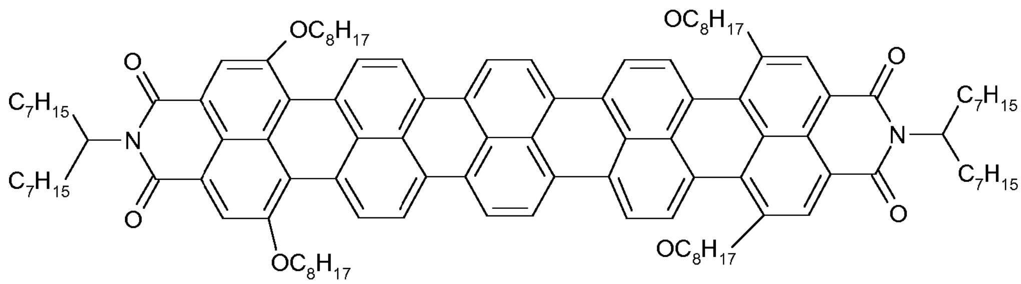 |
| |
| 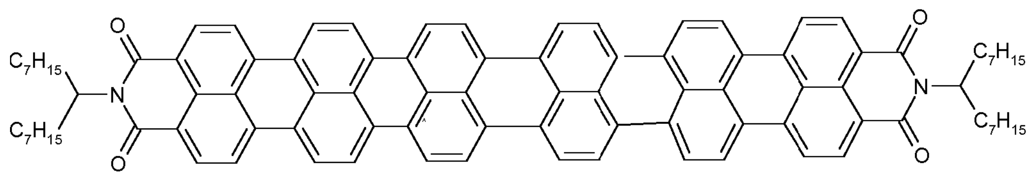 |
| |
| 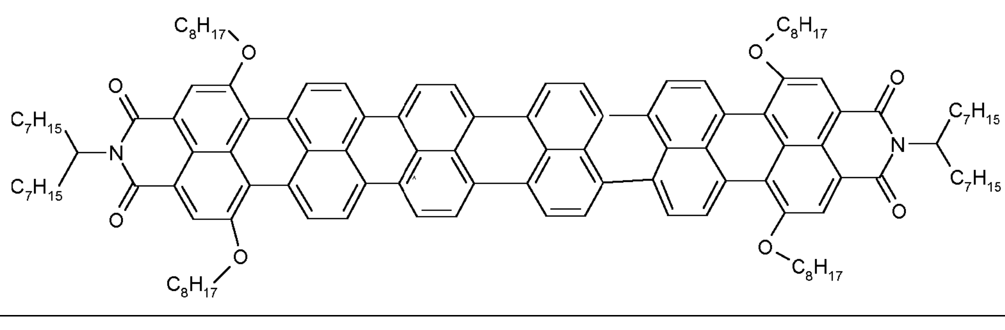 |

(fortgesetzt)

| |
|---|
| 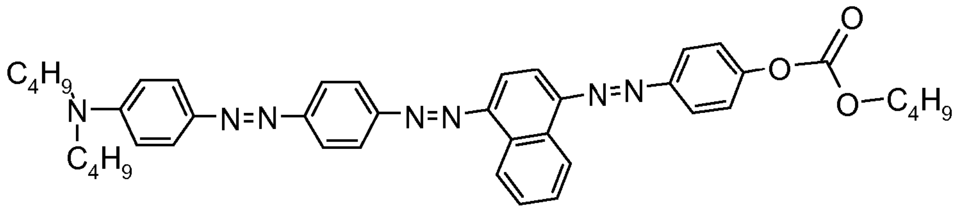 |
| |
| 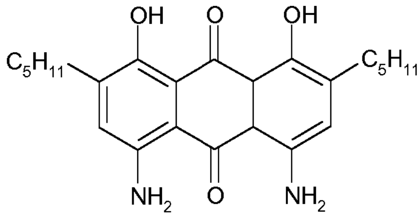 |
| |
| 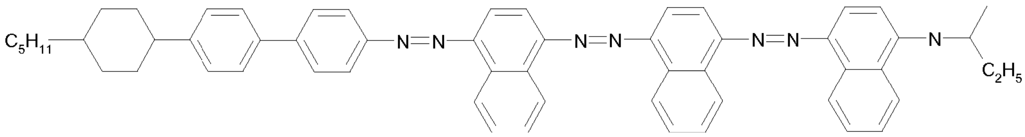 |
| |
| 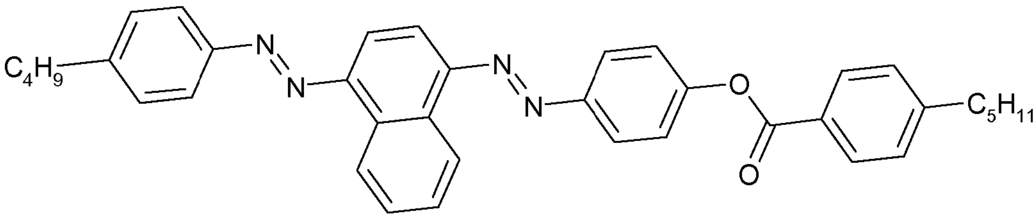 |
| |
| 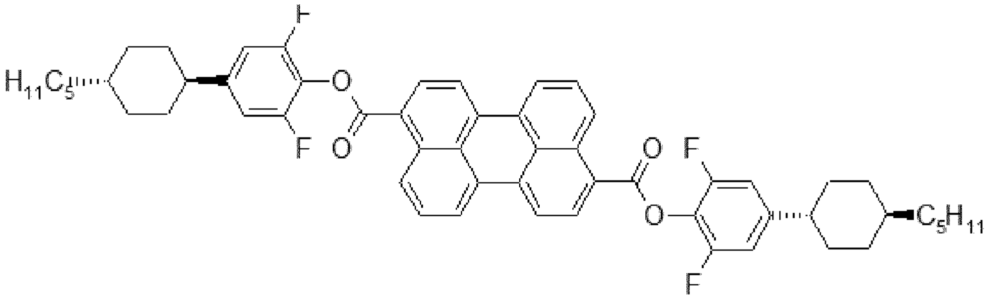 |
| |
| 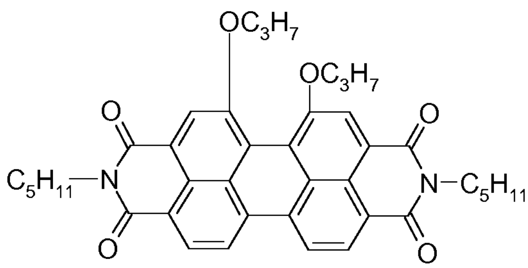 |

(fortgesetzt)

| |
|---|
| 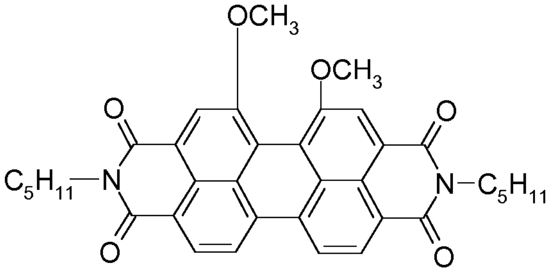 |
| |
| 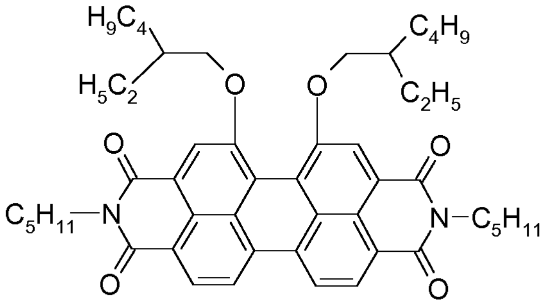 |
| |
| 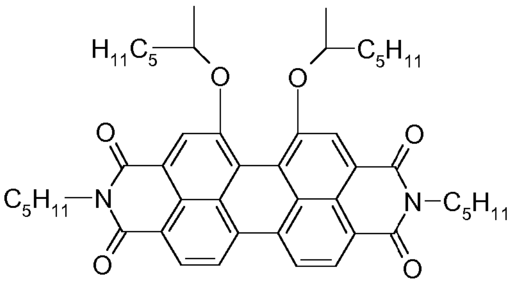 |
| |
| 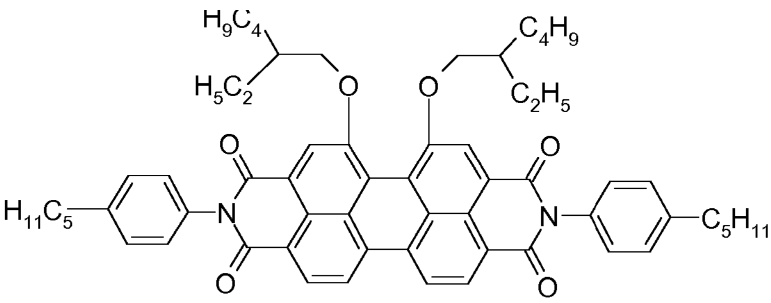 |
| |
| 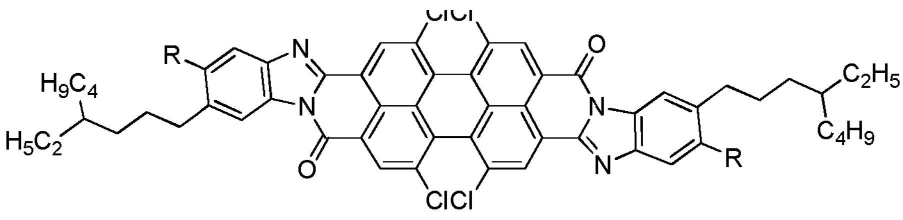 R = gleiche Alkylkette wie in der ortho-Position |

(fortgesetzt)

| |
|---|
| 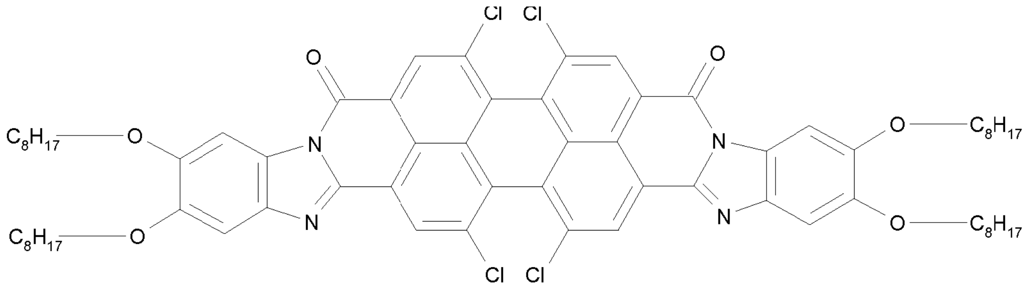 |
| |
| 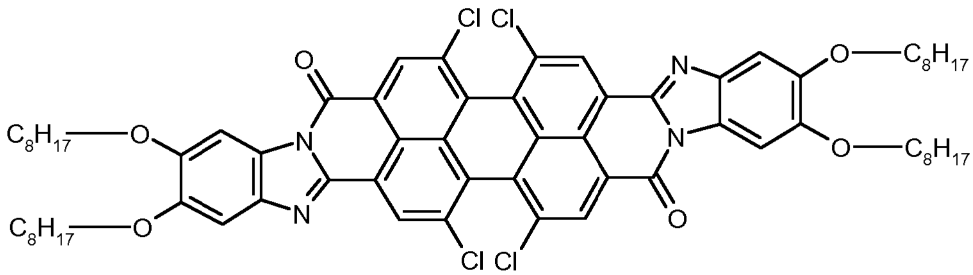 |
| |
| 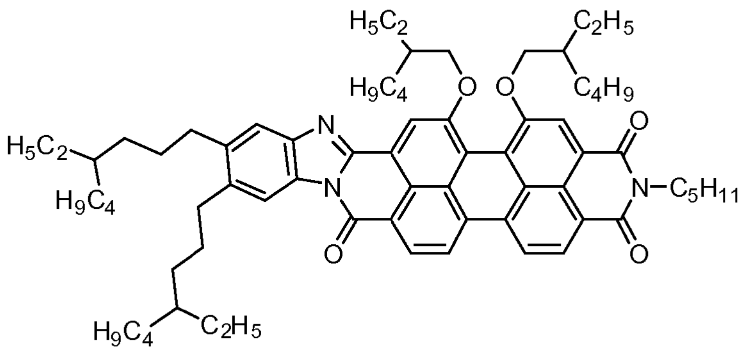 |
| |
| 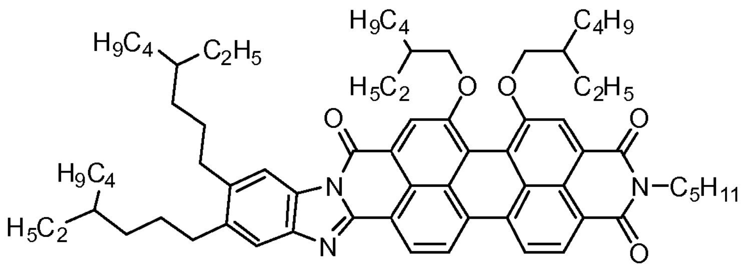 |
| |
| 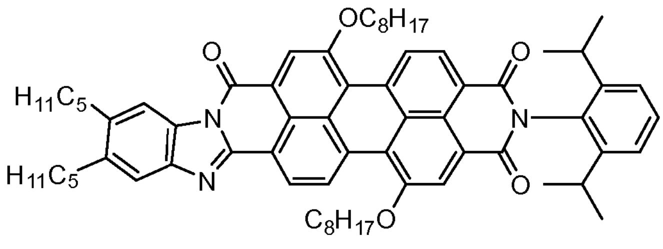 |

(fortgesetzt)

| |
|---|
| 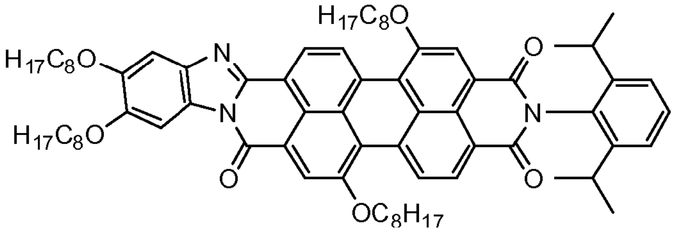 |
| |
| 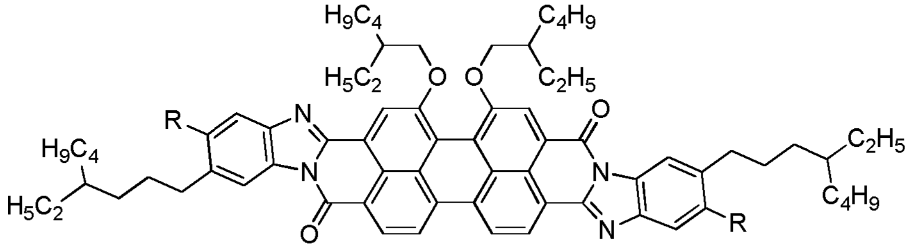<br>R = gleiche Alkylkette wie in der ortho-Position |
| |
| 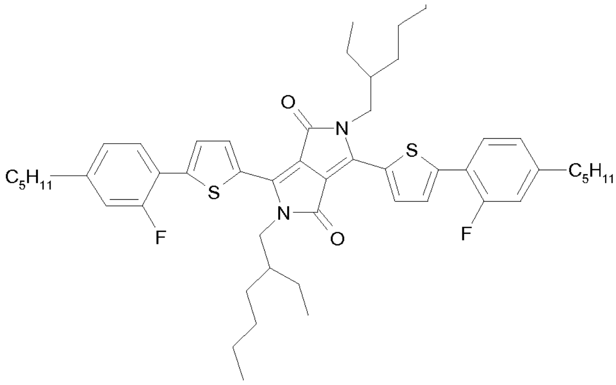 |
| |
| 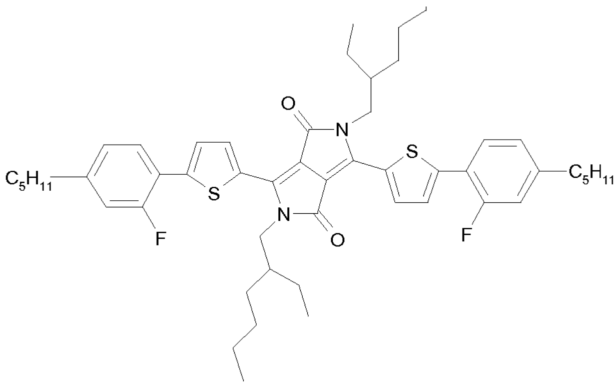 |
| |
| 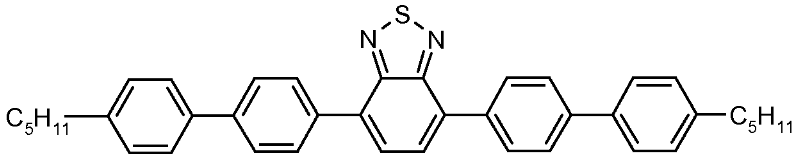 |

(fortgesetzt)

| |
|---|
| 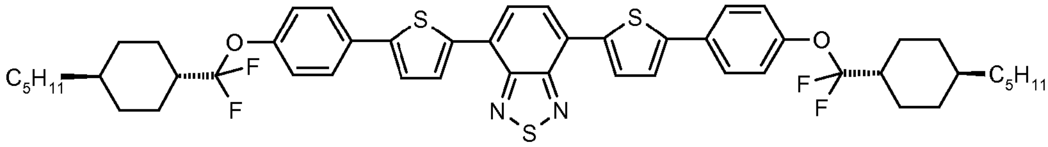 |
| |
| 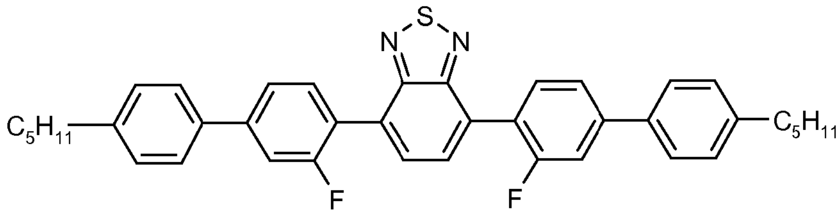 |
| |
| 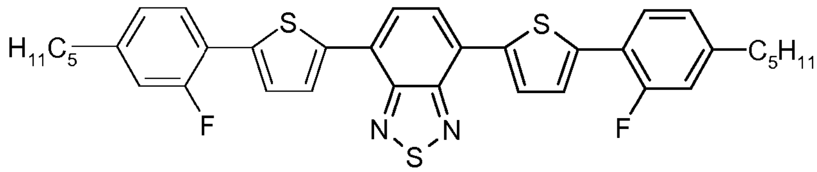 |
| |
| 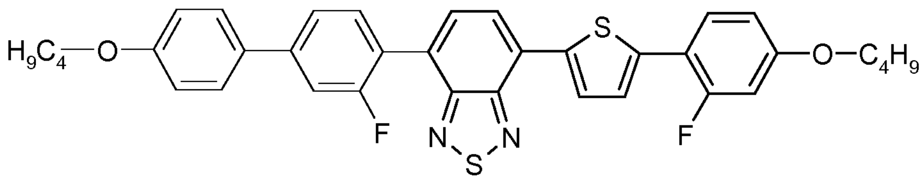 |
| |
| 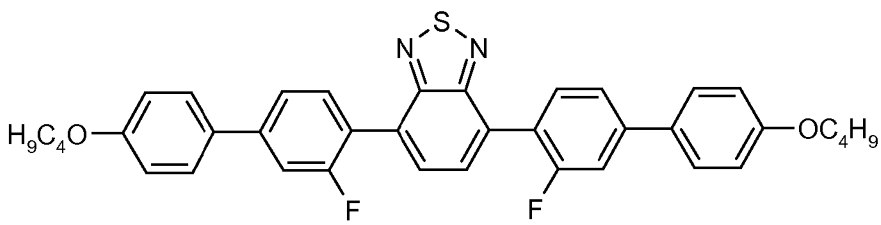 |
| 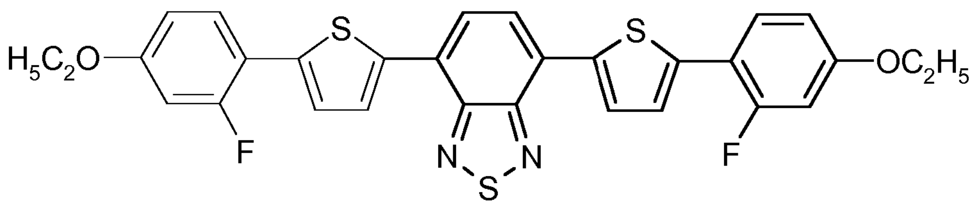 |
| |
| 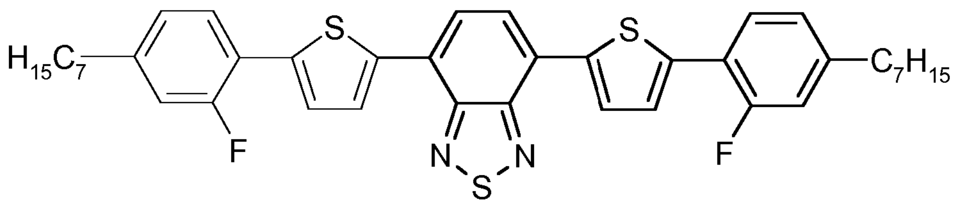 |

(fortgesetzt)

| |
|---|
| 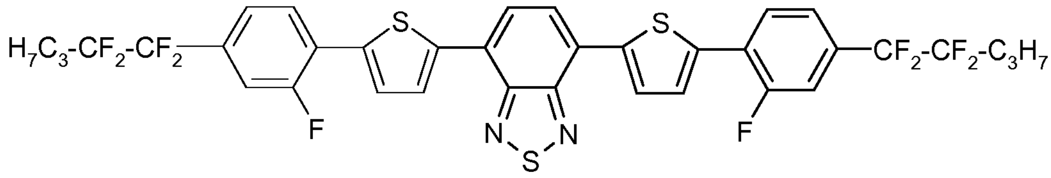 |
| |
| 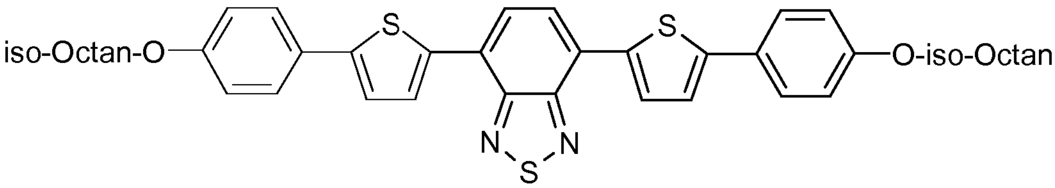 |
| |
| 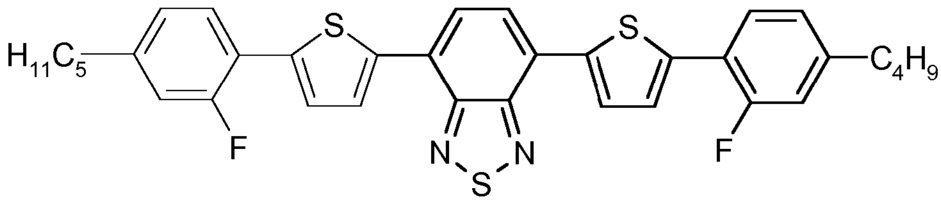 |
| |
| 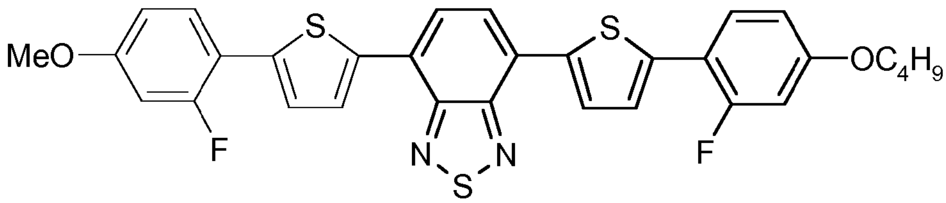 |
| |
| 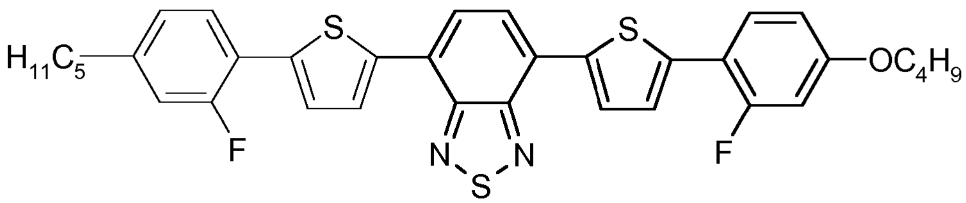 |
| |
| 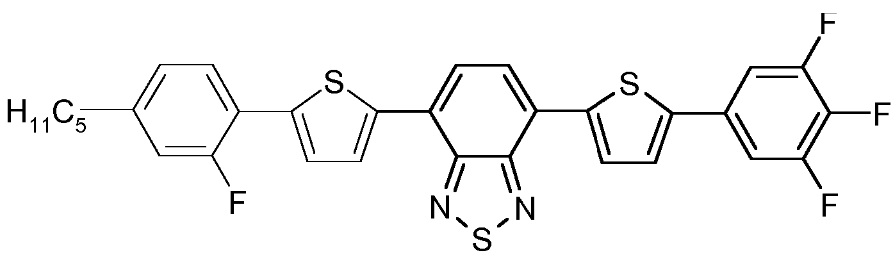 |

(fortgesetzt)

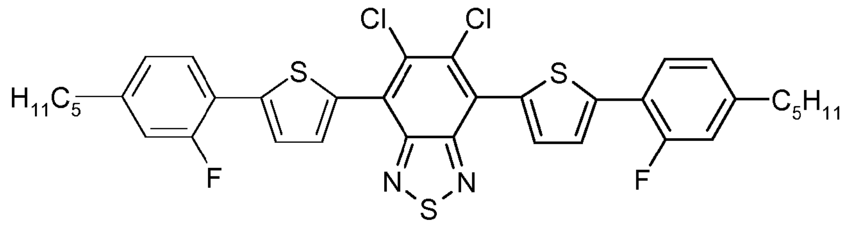

Eine weitere Ausführungsforme der Erfindung ist die Verwendung eines flüssigkristallinen Materials, enthaltend eine Farbstoffverbindung, wobei das flüssigkristalline Material einen Klärpunkt von mindestens 95°C hat und mindestens eine Verbindung V enthält, die mindestens eine Einheit gewählt aus Einheiten der Formeln (E-1),(E-2) und (E-3) umfasst, in einer Vorrichtung zur Regulierung des Lichtdurchtritts.

Es gelten dabei die bevorzugten Ausführungsformen der Verbindung V ebenfalls als bevorzugt, sowie die weiteren bevorzugten Ausführungsformen, die oben im Zusammenhang mit dem erfindungsgemäßen flüssigkristallinen Material angegeben sind.

Das flüssigkristalline Material liegt in der Vorrichtung in einer Schicht vor. Diese Schicht ist bevorzugt schaltbar, stellt also eine Schaltschicht dar.

Die erfindungsgemäße Vorrichtung ist bevorzugt zur Regulierung des Lichtdurchtritts in Form von Tageslicht von der Umgebung in einen Raum geeignet. Dabei erfolgt der zu regulierende Licht-Durchtritt von der Umwelt (dem Außenraum) in einen Raum hinein. Der Raum kann dabei ein beliebiger weitgehend von der Umgebung abgeschlossener Raum sein, beispielsweise ein Gebäude, ein Fahrzeug, oder ein Container. Die Vorrichtung kann allgemein für beliebige Räume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders relevant ist die Verwendung der Vorrichtung für Räume, welche starker Sonneneinstrahlung durch lichtdurchlässige Flächen, beispielsweise durch Fensterflächen, ausgesetzt sind.

Die erfindungsgemäße Vorrichtung ist bevorzugt in einer Öffnung einer größeren flächigen Struktur angeordnet, wobei die flächige Struktur selbst nicht oder nur geringfügig Lichtdurchtritt zulässt, und wobei die Öffnung relativ gesehen lichtdurchlässiger ist. Bevorzugt ist die flächige Struktur eine Wand oder eine sonstige Begrenzung eines Raums nach außen. Bevorzugt ist die erfindungsgemäße Vorrichtung dadurch gekennzeichnet, dass sie eine Flächenausdehnung von mindestens 0.05 $m^2$ aufweist, bevorzugt mindestens 0.1 $m^2$, besonders bevorzugt mindestens 0.5 $m^2$ und ganz besonders bevorzugt mindestens 0.8 $m^2$.

Die erfindungsgemäße Vorrichtung ist schaltbar. Unter Schaltung wird dabei eine Änderung des Licht-Durchtritts durch die Vorrichtung verstanden. Die erfindungsgemäße Vorrichtung ist bevorzugt elektrisch schaltbar.

Ist die Vorrichtung elektrisch schaltbar, umfasst sie bevorzugt zwei oder mehr Elektroden, die zu beiden Seiten der Schaltschicht enthaltend das flüssigkristalline Material angebracht sind. Die Elektroden bestehen bevorzugt aus ITO oder aus einer dünnen, bevorzugt transparenten Metall- und/oder Metalloxidschicht, beispielsweise aus Silber oder FTO (Fluordotiertes Zinnoxid) oder einem alternativen, dem Fachmann für diese Verwendung bekannten Material. Die Elektroden sind bevorzugt mit elektrischen Anschlüssen versehen. Die Spannung wird bevorzugt durch eine Batterie, einen Akkumulator, oder durch externe Stromversorgung bereitgestellt.

Der Schaltvorgang erfolgt im Fall von elektrischer Schaltung durch eine Ausrichtung der Moleküle des flüssigkristallinen Materials durch das Anlegen von Spannung.

In einer bevorzugten Ausführungsform wird dabei die Vorrichtung durch Anlegen einer Spannung von einem Zustand mit hoher Absorption, d. h. geringer Lichtdurchlässigkeit, der ohne Spannung vorliegt, in einen Zustand mit geringerer Absorption, d. h. höherer Lichtdurchlässigkeit, überführt. Bevorzugt ist das flüssigkristalline Material in der Schicht in der Vorrichtung in beiden Zuständen nematisch. Der spannungslose Zustand ist bevorzugt dadurch gekennzeichnet, dass die Moleküle des flüssigkristallinen Materials, und damit die Moleküle der Farbstoffverbindung, parallel zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Materials, und damit die Moleküle der Farbstoffverbindung, senkrecht zur Ebene der Schaltschicht vorliegen.

In einer zur oben genannten Ausführungsform alternativen Ausführungsform wird die Vorrichtung durch Anlegen einer Spannung von einem Zustand mit geringer Absorption, d. h. hoher Lichtdurchlässigkeit, der ohne Spannung vorliegt, in einen Zustand mit höherer Absorption, d. h. geringerer Lichtdurchlässigkeit, überführt. Bevorzugt ist das flüssigkristalline Material in der Schicht in der Vorrichtung in beiden Zuständen nematisch. Der spannungslose Zustand ist bevorzugt dadurch gekennzeichnet, dass die Moleküle des flüssigkristallinen Materials, und damit die Moleküle der Farbstoffverbindung, senkrecht zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, dass die Moleküle des flüssigkristallinen Materials, und damit die Moleküle der Farbstoffverbindung, parallel zur Ebene der Schaltschicht vorliegen.

Gemäß einer bevorzugten Ausführungsform der Erfindung kann die Vorrichtung ohne externe Stromversorgung betrieben werden, indem die nötige Energie durch eine Solarzelle oder eine sonstige Vorrichtung zur Umwandlung von Licht und/oder Wärmeenergie in elektrische Energie bereitgestellt wird, die mit der Vorrichtung verbunden ist. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innerer Bestandteil der Vorrichtung, wie beispielsweise in WO 2009/141295 offenbart. Bevorzugt sind dabei insbesondere Solarzellen, welche bei diffusem Licht besonders effizient sind, sowie transparente Solarzellen.

In einer Ausführungsform weist die Vorrichtung bevorzugt die folgende Schichtenabfolge auf, wobei zusätzlich weitere Schichten vorhanden sein können. Bevorzugt grenzen die im Folgenden angegebenen Schichten in der Vorrichtung direkt aneinander.

- Substratschicht, bevorzugt aus Glas oder Polymer
- elektrisch leitfähige transparente Schicht, bevorzugt aus ITO
- Orientierungsschicht
- Schaltschicht, enthaltend das flüssigkristalline Material
- Orientierungsschicht
- elektrisch leitfähige transparente Schicht, bevorzugt aus ITO
- Substratschicht, bevorzugt aus Glas oder Polymer.

Die bevorzugten Ausführungsformen der einzelnen Schichten werden im Folgenden dargestellt.

Bevorzugt umfasst die erfindungsgemäße Vorrichtung eine oder mehrere, besonders bevorzugt zwei Orientierungsschichten. Die Orientierungsschichten liegen bevorzugt direkt angrenzend an die beiden Seiten der Schicht enthaltend das flüssigkristalline Material vor.

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle des flüssigkristallinen Materials in Reiberichtung, wenn die Moleküle parallel zur Orientierungsschicht vorliegen (planare Ausrichtung). Dabei ist es bevorzugt, dass die Moleküle des flüssigkristallinen Materials nicht völlig planar auf der Orientierungsschicht vorliegen, sondern einen leichten Aufstellwinkel aufweisen (pretilt). Zum Erreichen von vertikaler Ausrichtung der Verbindungen des flüssigkristallinen Materials zur Oberfläche der Orientierungsschicht (homeotrope Ausrichtung) wird bevorzugt auf bestimmte Art behandeltes Polyimid als Material für die Orientierungsschicht eingesetzt (Polyimid für sehr hohe Pretiltwinkel).

Weiterhin können Polymere, die durch einen Belichtungsvorgang mit polarisiertem Licht erhalten wurden, als Orientierungsschicht zum Erreichen einer Ausrichtung der Verbindungen des flüssigkristallinen Materials gemäß einer Orientierungsachse verwendet werden (photoalignment).

Weiterhin bevorzugt ist in der erfindungsgemäßen Vorrichtung die Schicht enthaltend das flüssigkristalline Material zwischen zwei Substratschichten angeordnet bzw. von diesen eingeschlossen. Die Substratschichten können beispielsweise aus Glas oder einem Polymer, bevorzugt einem lichtdurchlässigen Polymer, bestehen.

Bevorzugt ist die Vorrichtung dadurch gekennzeichnet, dass sie keinen Polarisator auf Polymerbasis, besonders bevorzugt keinen in fester Materiephase vorliegenden Polarisator und ganz besonders bevorzugt überhaupt keinen Polarisator umfasst.

Die Vorrichtung kann jedoch gemäß einer alternativen Ausführungsform auch einen oder mehrere Polarisatoren aufweisen. Bevorzugt sind die Polarisatoren in diesem Fall Linearpolarisatoren.

Wenn genau ein Polarisator vorhanden ist, so ist dessen Absorptionsrichtung bevorzugt senkrecht stehend zur Orientierungsachse der Verbindungen des flüssigkristallinen Materials der erfindungsgemäßen Vorrichtung auf derjenigen Seite der Schaltschicht, auf der sich der Polarisator befindet.

In der erfindungsgemäßen Vorrichtung können sowohl absorptive als auch reflektive Polarisatoren eingesetzt werden. Bevorzugt werden Polarisatoren verwendet, die als dünne optische Filme vorliegen. Beispiele für reflektive Polarisatoren, die in der erfindungsgemäßen Vorrichtung verwendet werden können, sind DRPF- (diffusive reflective polariser film, 3M), DBEF- (dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7023602). Weiterhin können Polarisatoren basierend auf Drahtgittern (WGP, wire-gridpolarisers), welche Infrarotlicht reflektieren, eingesetzt werden. Beispiele für absorptive Polarisatoren, welche

in den erfindungsgemäßen Vorrichtungen eingesetzt werden können, sind der Itos XP38-Polarisatorfilm und der Nitto Denko GU-1220DUN-Polarisatorfilm. Ein Beispiel für einen circularen Polarisator, welcher erfindungsgemäß verwendet werden kann, ist der Polarisator APNCP37-035-STD (American Polarizers). Ein weiteres Beispiel ist der Polarisator CP42 (ITOS).

Weiterhin bevorzugt enthält erfindungsgemäße Vorrichtung ein Lichtleitsystem, das Licht zu einer Solarzelle oder einer sonstigen Vorrichtung zur Umwandlung von Licht und/oder Wärmeenergie in elektrische Energie leitet, bevorzugt wie in WO 2009/141295 beschrieben. Das Lichtleitsystem sammelt und konzentriert Licht, das auf die Vorrichtung trifft. Bevorzugt sammelt und konzentriert es Licht, das von der Farbstoffverbindung emittiert wird. Das Lichtleitsystem steht mit einer Vorrichtung zur Umwandlung von Lichtenergie in elektrische Energie, bevorzugt einer Solarzelle, in Kontakt, so dass das gesammelte Licht konzentriert auf diese trifft. In einer bevorzugten Ausführungsform der Erfindung ist die Vorrichtung zur Umwandlung von Lichtenergie in elektrische Energie am Rand der Vorrichtung angebracht, in diese integriert und elektrisch mit Mitteln zur elektrischen Schaltung der erfindungsgemäßen Vorrichtung verbunden.

In einer bevorzugten Ausführungsform ist die erfindungsgemäße Vorrichtung Bestandteil eines Fensters, besonders bevorzugt eines Fensters enthaltend mindestens eine Glasfläche, ganz besonders bevorzugt eines Fensters, welches Mehrscheiben-Isolierglas enthält.

Unter Fenster wird dabei insbesondere eine Struktur in einem Gebäude verstanden, welche einen Rahmen und mindestens eine von diesem Rahmen umfasste Glasscheibe enthält. Bevorzugt enthält sie einen wärmeisolierenden Rahmen und zwei oder mehr Glasscheiben (Mehrscheiben-Isolierglas).

Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierglas.

Ein Fenster enthaltend eine erfindungsgemäße Vorrichtung, bevorzugt mit den oben angegebenen bevorzugten Merkmalen, ist weiterer Gegenstand der Erfindung.

## Ausführungsbeispiele

A) Herstellung von flüssigkristallinen Mischungen

Es werden die beiden Vergleichsmischungen V1 und V2 hergestellt. Weiterhin werden die flüssigkristallinen Referenzmischungen E1 bis E9 hergestellt, die nicht erfindungsgemäß sind.

Die Zusammensetzung der Mischungen V1, V2 und E1 - E10 ist im Folgenden angegeben. Dabei werden die chemischen Strukturen der einzelnen Bestandteile der Mischungen durch Abkürzungen wiedergegeben (Akronyme). Diese Abkürzungen sind in WO 2012/052100 explizit vorgestellt und erklärt (S. 63 - 89), so dass zur Erläuterung auf die genannte Anmeldung verwiesen wird.

Die folgenden Abkürzungen entsprechen nicht der genannten Nomenklatur, so dass die entsprechenden chemischen Strukturen explizit genannt werden.

| |
|---|
| 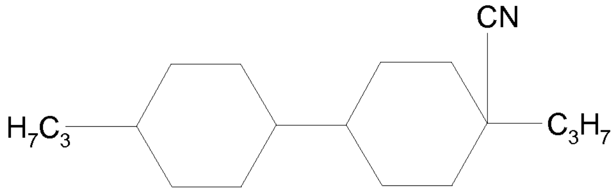 |
| CCN-33 |
| 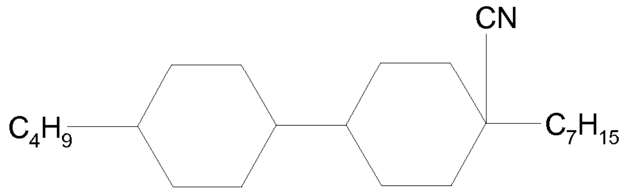 |
| CCN-47 |

(fortgesetzt)

| |
|---|
| 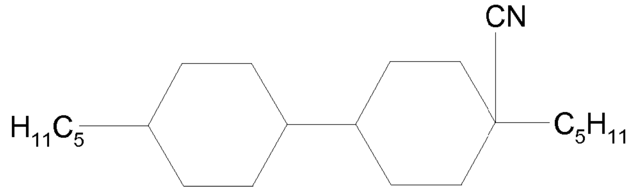 |
| CCN-55 |
| 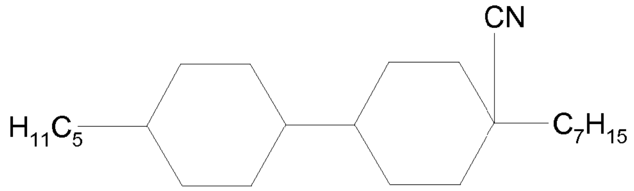 |
| CCN-57 |
| 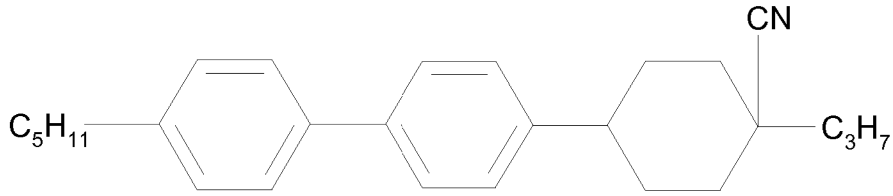 |
| NCB-53 |
| 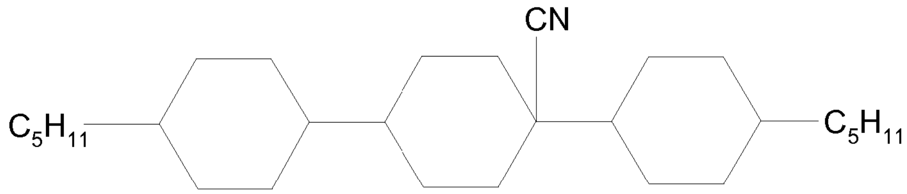 |
| BCN-55 |
| 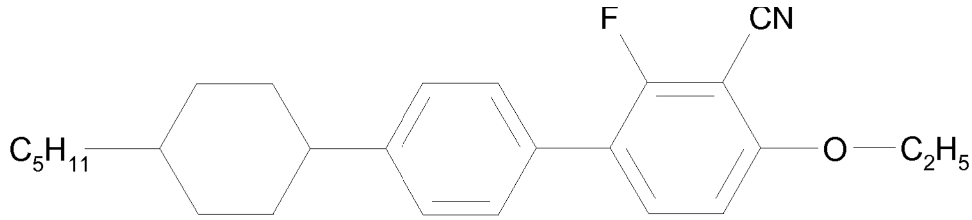 |
| BCH-502F.N |
| 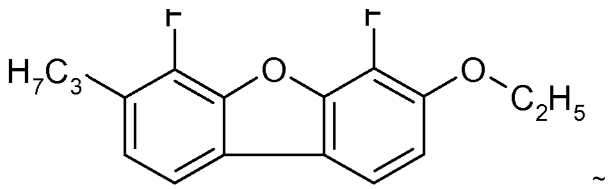 |
| B-3-O2 |

(fortgesetzt)

| |
|---|
| 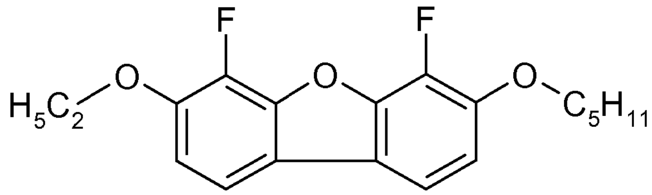 |
| B-2O-O5 |

Für die Mischungen sind der Klärpunkt in Grad Celsius, die optische Anisotropie $\Delta n$ und die dielektrische Anisotropie $\Delta\varepsilon$ angegeben. Die physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C. Der Wert von $\Delta n$ wird bei 589 nm bestimmt und der Wert von $\Delta\varepsilon$ wird bei 1 kHz bestimmt.

Die Tieftemperaturstabilität wird in Flaschen und in ca. 6 Mikrometer dicken Testzellen jeweils bei Raumtemperatur (+20°C) und bei den Temperaturen -20°C, -30°C und -40°C ermittelt.

In Abständen von 24 h werden die Proben einer visuellen Inspektion auf Kristalle oder die Entstehung smektischer Phasen unterzogen. Solange bei keiner der genannten Temperaturen Kristalle oder smektische Phasen in Flasche oder Testzelle beobachtet werden, wird der Test fortgesetzt. Sobald auch in nur einer der Proben Kristalle oder smektische Phasen beobachtet werden, wird der Test beendet, und die erreichte Anzahl an Tagen wird als Tieftemperaturstabilität angegeben.

| Tabelle 1 | | | | |
|---|---|---|---|---|
| Mischung | **V1** | | **V2** | |
| Klärpunkt in °C | 91.5 | | 79.5 | |
| $\Delta\varepsilon$ | -3.7 | | -3.1 | |
| $\Delta n$ | 0.078 | | 0.100 | |
| TieftemperaturStabilität | 8 Tage | | 42 Tage | |
| Zusammensetzung | | | | |
| | CY-3-O2 | 12 | CY-3-O2 | 12 |
| | CY-5-O2 | 12 | CY-5-O2 | 13 |
| | CCY-3-O2 | 13 | CCY-3-O2 | 11 |
| | CCY-5-O2 | 13 | CCY-5-O2 | 10 |
| | CCY-3-1 | 8 | CCY-2-1 | 9 |
| | CCZC-3-3 | 4 | CPP-3-2 | 6 |
| | CCZC-3-5 | 3 | CPP-5-2 | 4 |
| | CCZC-4-3 | 3 | CGP-3-2 | 6 |
| | CC-3-4 | 6 | CC-3-4 | 6 |
| | CC-3-5 | 6 | CC-3-5 | 6 |
| | CC-3-O3 | 8 | CP-3-O2 | 17 |
| | CC-5-O 1 | 4 | | |
| | CC-5-O2 | 4 | | |
| | CP-3-O2 | 4 | | |

| Tabelle 2 | | | | |
|---|---|---|---|---|
| Mischung | **E1** | | **E2** | |
| Klärpunkt in °C | 100.5 | | 106 | |
| $\Delta\varepsilon$ | -4.8 | | -6 | |
| $\Delta$n | 0.044 | | 0.118 | |
| Tieftempe-ratur-Stabilität | > 42 Tage | | > 73 Tage | |
| Zusammensetzung | | | | |
| | CCN-47 | 20 | CCN-33 | 10 |
| | CCN-55 | 21 | CCN-47 | 10 |
| | CC-3-O1 | 11 | CCN-57 | 10 |
| | CC-5-O1 | 5 | CY-3-O2 | 5 |
| | CC-5-O2 | 5 | NCB-53 | 13 |
| | CCZC-3-3 | 4 | CCY-3-O2 | 5 |
| | CCZC-3-5 | 4 | CCY-3-O3 | 5 |
| | CCZC-4-3 | 4 | CCY-4-O2 | 6 |
| | CCZC-4-5 | 4 | CPY-2-O2 | 9 |
| | BCN-55 | 22 | CPY-3-O2 | 8 |
| | | | PYP-2-3 | 7 |
| | | | PYP-2-4 | 6 |
| | | | CGPC-3-3 | 2 |
| | | | CGPC-5-3 | 2 |
| | | | CGPC-5-5 | 2 |

| Tabelle 3 | | | | |
|---|---|---|---|---|
| Mischung | **E3** | | **E4** | |
| Klärpunkt in °C | 113.5 | | 107.5 | |
| $\Delta\varepsilon$ | -6.0 | | -4.9 | |
| $\Delta$n | 0.127 | | 0.103 | |
| TieftemperaturStabilität | > 100 Tage | | > 83 Tage | |
| Zusammensetzung | | | | |
| | CCN-33 | 8 | CCN-33 | 13 |
| | CCN-47 | 8 | CCN-47 | 15 |
| | CCN-55 | 9 | CCN-55 | 12 |
| | CY-3-O2 | 5 | NCB-53 | 10 |
| | NCB-53 | 12 | CPY-2-O2 | 5 |
| | CCY-3-O2 | 5 | CPY-3-O2 | 5 |
| | CCY-3-O3 | 5 | CCY-4-O2 | 5 |
| | CCY-4-O2 | 6 | PYP-2-3 | 10 |

(fortgesetzt)

| | | | | |
|---|---|---|---|---|
| Zusammensetzung | | | | |
| | CPY-2-O2 | 9 | CP-3-O1 | 8 |
| | CPY-3-O2 | 8 | CGPC-3-3 | 4 |
| | PYP-2-3 | 7 | CGPC-5-3 | 3 |
| | PYP-2-4 | 6 | CGPC-5-5 | 3 |
| | CGPC-3-3 | 2 | CCZPC-3-3 | 3 |
| | CGPC-5-3 | 2 | CCZPC-3-4 | 2 |
| | CGPC-55 | 2 | CCZPC-3-5 | 2 |
| | CPP-3-2 | 3 | | |
| | CPP-5-2 | 3 | | |

| Tabelle 4 | | | | |
|---|---|---|---|---|
| Mischung | **E5** | | **E6** | |
| Klärpunkt in °C | 111.5 | | 107.5 | |
| Δε | -4.7 | | 5.5 | |
| Δn | 0.124 | | 0.129 | |
| TieftemperaturStabilität | > 73 Tage | | > 73 Tage | |
| Zusammensetzung | | | | |
| | CCN-47 | 10 | CCN-33 | 8 |
| | CCN-55 | 10 | CCN-47 | 10 |
| | CY-3-O2 | 6 | CCN-55 | 10 |
| | CP-3-O 1 | 10 | CY-3-O2 | 10 |
| | NCB-53 | 10 | BCH-502F.N | 10 |
| | CPY-2-O2 | 7 | CPY-2-O2 | 6 |
| | CPY-3-O2 | 7 | CPY-3-O2 | 9 |
| | CCY-3-O2 | 6 | CCY-4-O2 | 5 |
| | CCY-5-O2 | 7 | PYP-2-3 | 10 |
| | PYP-2-3 | 10 | PYP-2-4 | 10 |
| | CGP-3-2 | 6 | CGPC-3-3 | 3 |
| | CGPC-3-3 | 3 | CGPC-5-3 | 3 |
| | CGPC-5-3 | 3 | CGPC-5-5 | 3 |
| | CGPC-5-5 | 2 | CCZPC-3-3 | 3 |
| | CCZPC-3-3 | 3 | | |

| Tabelle 5 | | |
|---|---|---|
| Mischung | **E7** | **E8** |
| Klärpunkt in °C | 110.5 | 74 |
| Δε | -4.9 | -3.5 |

(fortgesetzt)

| Tabelle 5 | | | | |
|---|---|---|---|---|
| Mischung | **E7** | | **E8** | |
| Δn | 0.132 | | 0.101 | |
| TieftemperaturStabilität | > 76 Tage | | 13 Tage | |
| Zusammensetzung | | | | |
| | CY-3-O2 | 9 | CC-3-V | 41.5 |
| | CY-3-O4 | 9 | CCY-3-O1 | 5 |
| | CY-5-O2 | 12 | CCY-3-O2 | 11 |
| | CY-5-O4 | 8 | CCY-4-O2 | 6 |
| | CCY-3-O2 | 5 | CPY-2-O2 | 5 |
| | CCY-3-O3 | 5 | CPY-3-O2 | 11 |
| | CCY-4-O2 | 5 | CY-3-O2 | 3.5 |
| | CPY-2-O2 | 7 | PY-3-O2 | 12 |
| | CPY-3-O2 | 6 | B-3-O2 | 5 |
| | PYP-2-3 | 12 | | |
| | CCP-V-1 | 6 | | |
| | CCZPC-3-3 | 3 | | |
| | CCZPC-3-4 | 3 | | |
| | CGPC-3-3 | 5 | | |
| | CGPC-5-3 | 5 | | |

| Tabelle 6 | | | | |
|---|---|---|---|---|
| Mischung | **E9** | | **E10** | |
| Klärpunkt in °C | 74 | | 87 | |
| Δε | -3.6 | | -4.8 | |
| Δn | 0.101 | | 0.103 | |
| Tieftemperatur-Stabilität | 15 Tage | | n. best. | |
| Zusammensetzung | | | | |
| | CC-3-V | 40.5 | CY-3-O2 | 12.5 |
| | CCY-3-O1 | 5 | CCY-3-O1 | 9 |
| | CCY-3-O2 | 11 | CCY-3-O2 | 11 |
| | CCY-4-O2 | 6 | CCY-4-O2 | 7 |
| | CPY-2-O2 | 5.5 | CPY-3-O2 | 3 |
| | CPY-3-O2 | 11 | CC-3-V | 31 |
| | CY-3-O2 | 5 | B-2O-O5 | 4 |
| | PY-3-O2 | 12 | PY-V2-O2 | 5.5 |
| | B-3-O2 | 4 | CPY-V-O2 | 6 |
| | | | CPY-V-O4 | 5 |

(fortgesetzt)

| Tabelle 6 | | | | |
|---|---|---|---|---|
| Mischung | **E9** | | **E10** | |
| | | | CCY-V-O2 | 6 |

B) Herstellung von flüssigkristallinen Mischungen enthaltend Farbstoffe und Bestimmung ihrer physikalischen Eigenschaften

Von allen unter A) aufgeführten Mischungen E1-E10 werden Mischungen enthaltend einen oder mehrere Farbstoffe hergestellt. Eine repräsentative Auswahl der Ergebnisse ist im Folgenden dargestellt.

B-1) Herstellung von Mischungen enthaltend den Farbstoff F1 und Bestimmung von Anisotropiegrad und Löslichkeit

Es werden Mischungen enthaltend den Farbstoff F1 in einer der flüssigkristallinen Mischungen V1, E1, E2, E3 und E7 hergestellt (Zusammensetzung s. Tabelle unten)

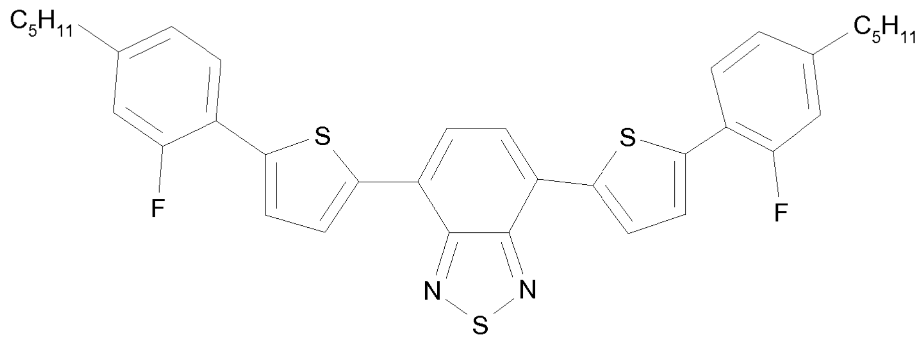

Farbstoff F1

Der Anisotropiegrad R wird ermittelt aus dem Wert für den Extinktionskoeffizienten E(p) (Extinktionskoeffizient der Mischung bei paralleler Ausrichtung der Moleküle zur Polarisationsrichtung des Lichts) und dem Wert für den Extinktionskoeffizienten der Mischung E(s) (Extinktionskoeffizient der Mischung bei senkrechter Ausrichtung der Moleküle zur Polarisationsrichtung des Lichts), jeweils bei der Wellenlänge des Maximums der Absorptionsbande des betreffenden Farbstoffs. Hat der Farbstoff mehrere Absorptionsbanden, so wird die langwelligste Absorptionsbande ausgewählt. Die Ausrichtung der Moleküle der Mischung wird durch eine Orientierungsschicht erreicht, wie sie dem Fachmann auf dem Gebiet der LC-Vorrichtungen bekannt ist. Zur Eliminierung von Einflüssen durch flüssigkristallines Medium, sonstigen Absorptionen und/oder Reflexionen wird jeweils gegen eine identisch vorliegende Mischung, die keinen Farbstoff enthält, gemessen und der erhaltene Wert subtrahiert.

Die Messung erfolgt mit linear polarisiertem Licht, dessen Schwingungsrichtung entweder parallel zur Orientierungsrichtung ist (Bestimmung von E(p)) oder senkrecht zur Orientierungsrichtung ist (Bestimmung von E(s)). Dies kann durch einen Linearpolarisator erreicht werden, wobei der Polarisator gegen die Vorrichtung gedreht wird, um die beiden unterschiedlichen Schwingungsrichtungen zu realisieren. Die Messung von E(p) und E(s) erfolgt also über die Drehung der Schwingungsrichtung des eingestrahlten polarisierten Lichts. Alternativ kann auch die Probe gedreht werden gegen eine räumlich feststehende Polarisationsrichtung des eingestrahlen polarisierten Lichts.

Der Anisotropiegrad R wird aus den erhaltenen Werten für E(s) und E(p) nach der Formel

$$R=[E(p)-E(s)] / [E(p) + 2*E(s)]$$

berechnet, wie unter anderem in "Polarized Light in Optics and Spectroscopy", D. S. Kliger et al., Academic Press, 1990, angegeben. Eine detallierte Beschreibung des Verfahrens zur Bestimmung des Anisotropiegrads von flüssigkristallinen Medien enthaltend einen dichroitischen Farbstoff findet sich in B. Bahadur, Liquid Crystals - Applications and Uses, Vol. 3, 1992, World Scientific Publishing, Abschnitt 11.4.2.

Das genannte Verfahren wird identisch in allen folgenden Beispielen eingesetzt.

| Flüssigkristalline Mischung | Farbstoff | Konzentr. des Farbstoffs | Wellenlänge der maximalen Absorption | Anisotropiegrad |
|---|---|---|---|---|
| V1 (Vgl.) | F1 | 0.25 Gew.-% | 504 nm | 0.73 |
| E1 | F1 | 0.25 Gew.-% | 507 nm | 0.74 |
| E2 | F1 | 0.25 Gew.-% | 507 nm | 0.75 |
| E3 | F1 | 0.25 Gew.-% | 506 nm | 0.75 |
| E7 | F1 | 0.25 Gew.-% | 505 nm | 0.77 |

Die Ergebnisse zeigen, dass der Anisotropiegrad in den Referenzmischungen höher ist als in der Vergleichsmischung. Weiterhin wird die Löslichkeit des Farbstoffs F1 in den verschiedenen flüssigkristallinen Mischungen bei +20°C und -20°C untersucht.

| Flüssigkristalline Mischung | Farbstoff | Temperatur | Maximale Löslichkeit (Beobachtung nach 1 Woche) |
|---|---|---|---|
| V1 (Vgl) | F1 | +20°C | 1.4 Gew.-% |
| V1 (Vgl) | F1 | -20°C | 0.9 Gew.-% |
| E1 | F1 | +20°C | 1.4 Gew.-% |
| E1 | F1 | -20°C | 3.3 Gew.-% |
| E2 | F1 | +20°C | 4 Gew.-% |
| E2 | F1 | -20°C | 4 Gew.-% |
| E7 | F1 | +20°C | 1.3 Gew.-% |
| E7 | F1 | -20°C | 3.3 Gew.-% |

Dabei wird gefunden, dass die Löslichkeit in den Referenzmischungen deutlich höher ist als in der Vergleichsmischung.

B-2) Herstellung von Mischungen enthaltend den Farbstoff F2 und Bestimmung von Anisotropiegrad und Löslichkeit

Es wird wie in B-1) angegeben vorgegangen.

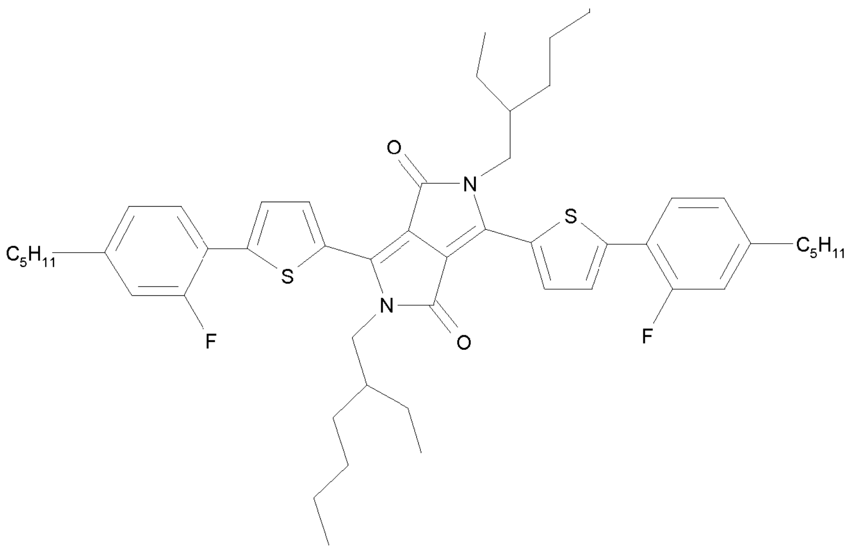

Farbstoff F2

| Flüssigkristalline Mischung | Farbstoff | Konzentr. des Farbstoffs | Wellenlänge der maximalen Absorption | Anisotropie grad |
|---|---|---|---|---|
| V1 (Vgl) | F2 | 0.25 Gew.-% | 615 nm | 0.81 |
| E2 | F2 | 0.25 Gew.-% | 615 nm | 0.80 |
| E3 | F2 | 0.25 Gew.-% | 617 nm | 0.81 |
| E7 | F2 | 0.25 Gew.-% | 617 nm | 0.81 |

| Flüssigkristalline Mischung | Farbstoff | Temperatur | Maximale Löslichkeit (Beobachtung nach Woche) |
|---|---|---|---|
| V1 (Vgl) | F2 | +20°C | 2.0 Gew.-% (1) |
| V1 (Vgl) | F2 | -20°C | 1.8 Gew.-% (1) |
| E2 | F2 | +20°C | 2.6 Gew.-% (1) |
| E2 | F2 | -20°C | 2.0 Gew.-% (1) |
| E3 | F2 | +20°C | 1.2 Gew.-% (4) |
| E3 | F2 | -20°C | 1.8 Gew.-% (4) |
| E7 | F2 | +20°C | 1.4 Gew.-% (12) |
| E7 | F2 | -20°C | 1.8 Gew.-% (12) |

Die Ergebnisse zeigen, dass mit den Referenzmischungen verbesserte Löslichkeiten bei vergleichbaren Anisotropiegraden erreicht werden.

B-3) Herstellung von Mischungen enthaltend den Farbstoff F3 und Bestimmung von Anisotropiegrad und Löslichkeit

Es wird wie in B-1) angegeben vorgegangen.

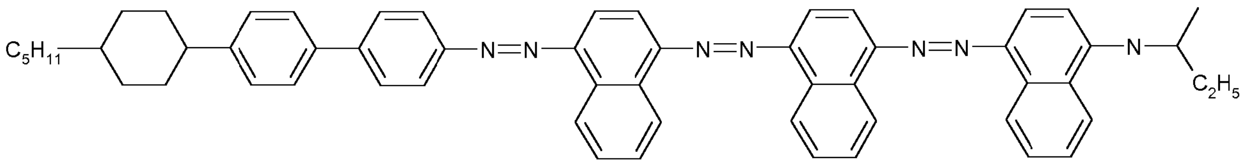

Farbstoff F3

| Flüssigkristalline Mischung | Farbstoff | Konzentr. des Farbstoffs | Wellenlänge der maximalen Absorption | Anisotropiegrad |
|---|---|---|---|---|
| V1 (Vgl) | F3 | 0.25Gew.-% | 613 nm | 0.81 |
| E2 | F3 | 0.25Gew.-% | 630 nm | 0.78 |
| E7 | F3 | 0.25Gew.-% | 617nm | 0.84 |

| Flüssigkristalline Mischung | Farbstoff | Temperatur | Maximale Löslichkeit (Beobachtung nach 1 Woche) |
|---|---|---|---|
| V1 (Vgl.) | F3 | +20°C | 0.8 Gew.-% |
| V1 (Vgl.) | F3 | -20°C | 2.3 Gew.-% |
| E1 | F3 | +20°C | 3.9 Gew.-% |

(fortgesetzt)

| Flüssigkristalline Mischung | Farbstoff | Temperatur | Maximale Löslichkeit (Beobachtung nach 1 Woche) |
|---|---|---|---|
| E1 | F3 | -20°C | 4.0 Gew.-% |
| E2 | F3 | +20°C | 4.5 Gew.-% |
| E2 | F3 | -20°C | 4.6 Gew.-% |
| E7 | F3 | +20°C | 4.1 Gew.-% |
| E7 | F3 | -20°C | 4.1 Gew.-% |

Die Ergebnisse zeigen, dass mit den Referenzmischungen verbesserte Löslichkeiten bei vergleichbaren Anisotropiegraden erreicht werden.

B-4) Herstellung von Mischungen enthaltend den Farbstoff F4 und Bestimmung von Anisotropiegrad und Löslichkeit

Es wird wie in B-1) angegeben vorgegangen.

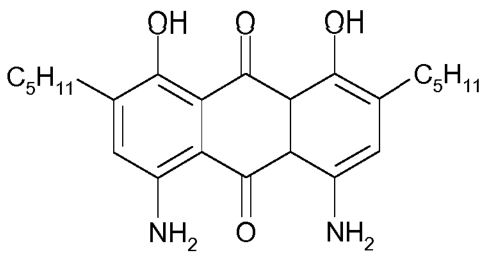

Farbstoff F4

| Flüssigkristalline Mischung | Farbstoff | Konzentr. des Farbstoffs | Wellenlänge der maximalen Absorption | Anisotropiegrad |
|---|---|---|---|---|
| V1 (Vgl) | F4 | 0.25 Gew.-% | 630 nm | 0.68 |
| E3 | F4 | 0.25 Gew.-% | 633 nm | 0.68 |
| E7 | F4 | 0.25 Gew.-% | 631 nm | 0.71 |

Die Ergebnisse zeigen, dass mit den Referenzmischungen vergleichbare oder bessere Anisotropiegrade erreicht werden als mit der Vergleichsmischung V1.

B-5) Herstellung von Mischungen enthaltend den Farbstoff F5 und Bestimmung von Anisotropiegrad und Löslichkeit

Es wird wie in B-1) angegeben vorgegangen.

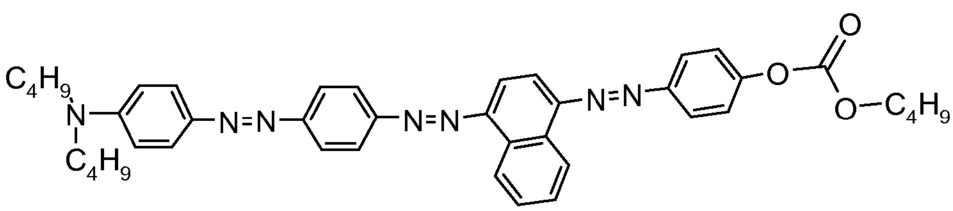

Farbstoff F5

| Flüssigkristalline Mischung | Farbstoff | Konzentr. des Farbstoffs | Wellenlänge der maximalen Absorption | Anisotropiegrad |
|---|---|---|---|---|
| V1 (Vgl) | F5 | 0.25 Gew.-% | 539 nm | 0.80 |
| E3 | F5 | 0.25 Gew.-% | 545 nm | 0.80 |
| E7 | F5 | 0.25 Gew.-% | 543 nm | 0.81 |

Die Referenzmischungen zeigen gleich gute oder bessere Anisotropiegrade wie die Vergleichsmischung V1 für den Farbstoff F5.

B-6) Herstellung von Mischungen enthaltend den Farbstoff F6 und Bestimmung von Anisotropiegrad und Löslichkeit

Es wird wie in B-1) angegeben vorgegangen.

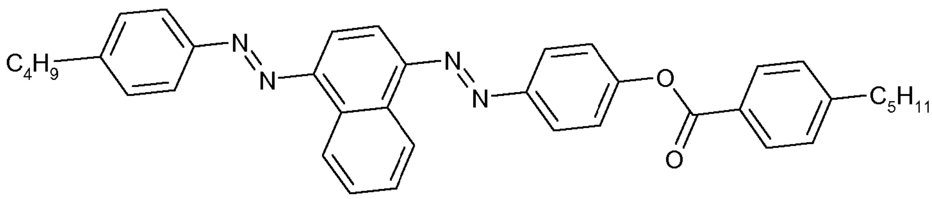

Farbstoff F6

| Flüssigkristalline Mischung | Farbstoff | Konzentr. des Farbstoffs | Wellenlänge der maximalen Absorption | Anisotropiegrad |
|---|---|---|---|---|
| V1 (Vgl) | F6 | 0.25 Gew.-% | 447 nm | 0.81 |
| E3 | F6 | 0.25 Gew.-% | 453 nm | 0.81 |
| E7 | F6 | 0.25 Gew.-% | 451 nm | 0.81 |

Das Beispiel zeigt, dass die Referenzmischungen für den Farbstoff F6 ähnliche Anisotropiegrade wie die Vergleichsmischung V1 aufweisen.

Mit der Vergleichsmischung V2 werden ähnliche Werte für Anisotropiegrad und Löslichkeit der Farbstoffe erhalten wie für die Vergleichsmischung V1. Die obenstehenden Beispiele zeigen, dass mit den erfindungsgemäßen Verbindungen flüssigkristalline Mischungen mit verschiedensten Farbstoffen hergestellt werden können. Die erhaltenen Mischungen zeichnen sich durch hohe Anisotropiegrade und hohe Löslichkeit der Farbstoffverbindungen bei hoher Lösungsstabilität aus und sind damit hervorragend zur Verwendung in Vorrichtungen zur Regulierung des Lichtdurchtritts geeignet.

C) Verwendung der Referenzmischung E7 in einer Vorrichtung zur Regulierung des Lichtdurchtritts

C-1) Es wird eine Mischung aus der flüssigkristallinen Mischung E7 und den Farbstoffen F1 (0.10 Gew.-%), F2 (0.23 Gew.-%), F7 (0.09 Gew.-%) und F8 (0.33 Gew.-%) hergestellt.

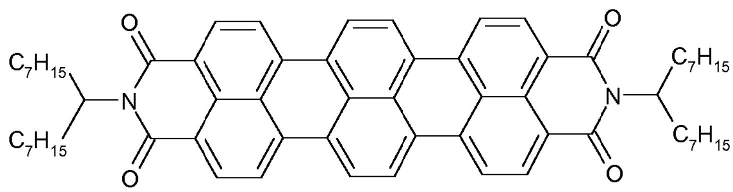

Farbstoff F7

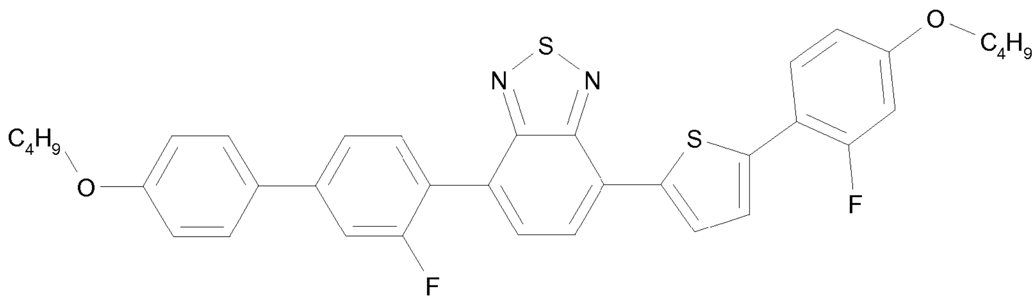

Farbstoff F8

Für die Mischung wird nach oben angegebenem Verfahren der Anisotropiegrad bestimmt. Dieser beträgt 0.8 über einen weiten Bereich von 430nm bis 630nm Wellenlänge des Lichts.

Das flüssigkristalline Material enthaltend die Farbstoffe wird in eine Vorrichtung zur Regulierung des Lichtdurchtritts gefüllt. Diese weist die folgende Schichtenfolge auf:

- Substratschicht aus Glas
- elektrisch leitfähige transparente Schicht aus ITO, 200 Angström
- Orientierungsschicht aus Polyimid, antiparallel gerieben
- Schaltschicht enthaltend das flüssigkristalline Material, 24.4 $\mu$m
- Orientierungsschicht aus Polyimid
- elektrisch leitfähige transparente Schicht aus ITO
- Substratschicht aus Glas

Das flüssigkristalline Material ist in dieser Anordnung planar mit antiparallelem Pretiltwinkel orientiert. Diese Orientierung wird durch antiparallel zueinander geriebene Polyimidschichten erreicht. Die Dicke der Flüssigkristallschicht wird durch Spacer kontrolliert. Die ITO-Schicht wird elektrisch kontaktiert, so dass eine elektrische Spannung über die Schaltschicht enthaltend das flüssigkristalline Material angelegt werden kann.

Durch Anlegen von Spannung kann farbneutrales Schalten der Vorrichtung zwischen Dunkel (keine Spannung) und Hell (Spannung) erreicht werden. Der Farbeindruck ist dabei grau.

Es werden für die Vorrichtung in den beiden Schaltzuständen die folgenden Werte für den Lichttransmissionsgrad $\tau_v$ erhalten:

$\tau_{v\ hell}$ = 84 %
$\tau_{v\ dunkel}$ = 49 %.

Die Berechnung der Lichttransmissionsgrade $\tau_{v\ hell}$ und $\tau_{v\ dunkel}$ erfolgt gemäß der Europäischen Norm EN410, Gleichung (1) (Bestimmung der lichttechnischen und strahlungsphysikalischen Kenngrößen von Verglasungen). Die Lichttransmissionsgrade $\tau_v$ gemäß dieser Norm berücksichtigen die relative spektrale Verteilung der Normlichtart und den spektralen Hellempfindlichkeitsgrad des Normalbeobachters.

Es wird eine weitere Vorrichtung hergestellt, welche zwei Schaltschichten umfasst, wie in den Ausführungsbeispielen der noch nicht offengelegten Anmeldung EP13002445.8 offenbart. Die Vorrichtung hat die folgende Schichtenanordnung:

- Glasschicht
- ITO-Schicht, 200 Angström
- Orientierungsschicht aus Polyimid, antiparallel gerieben
- Schaltschicht enthaltend das flüssigkristalline Material, 24.4 $\mu$m
- Orientierungsschicht aus Polyimid, antiparallel gerieben
- ITO-Schicht, 200 Angström
- Glasschicht
- Schichtenabfolge wie oben genannte 7 Schichten, um 90° gedreht gegen diese um eine Achse senkrecht durch die Schichten.

Es werden für die Vorrichtung in den beiden Schaltzuständen die folgenden Werte für den Lichttransmissionsgrad $\tau_v$ erhalten:

$\tau_{v\ hell} = 71\ \%$
$\tau_{v\ dunkel} = 11\ \%$.

C-2) Es wird eine Mischung aus der flüssigkristallinen Mischung E7 und den Farbstoffen F1 (0.103 Gew.-%), F8 (0.287 Gew.-%), F9 (0.101 Gew.-%) und F10 (0.518 Gew.-%) hergestellt.

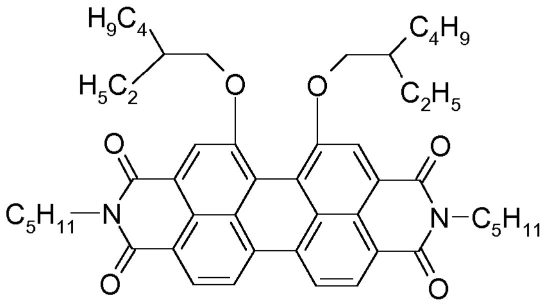

Farbstoff F9

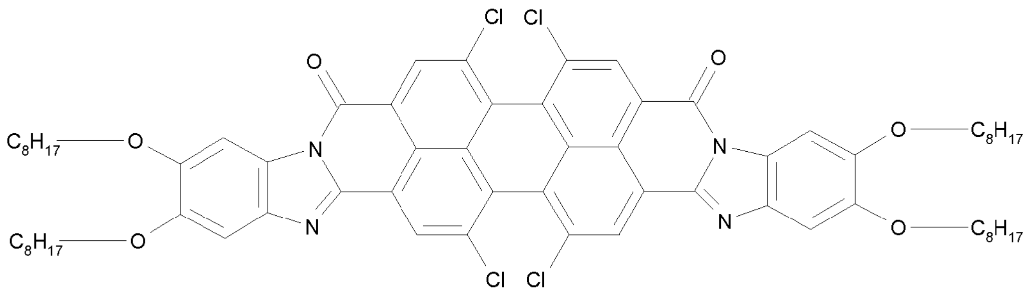

Farbstoff F10

Mit dieser Mischung wird, wie oben unter 1) angegeben, eine Vorrichtung zur Regulierung des Lichtdurchtritts mit einzelner Schaltschicht hergestellt.
Es werden für die Vorrichtung in den beiden Schaltzuständen die folgenden Werte für den Lichttransmissionsgrad $\tau_v$ erhalten:

$\tau_{v\ hell} = 81\ \%$
$\tau_{v\ dunkel} = 47\ \%$.

Zusätzlich wird mit dieser Mischung, wie ebenfalls oben unter 1) angegeben, eine Vorrichtung zur Regulierung des Lichtdurchtritts mit doppelter Schaltschicht hergestellt.
Es werden für die Vorrichtung in den beiden Schaltzuständen die folgenden Werte für den Lichttransmissionsgrad $\tau_v$ erhalten:

$\tau_{v\ hell} = 66\ \%$
$\tau_{v\ dunkel} = 10\ \%$.

C-3) Es wird eine Mischung aus der flüssigkristallinen Mischung E7 und den Farbstoffen F1 (0.048 Gew.-%), F8 (0.223 Gew.-%), F9 (0.116 Gew.-%) und F11 (0.679 Gew.-%) hergestellt.

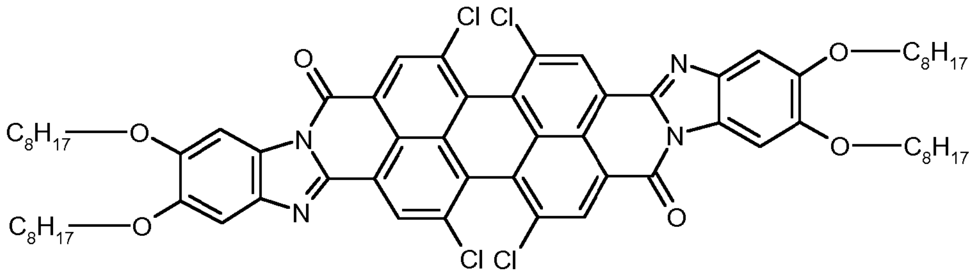

Farbstoff F11

Mit dieser Mischung wird wie oben unter 1) angegeben eine Vorrichtung zur Regulierung des Lichtdurchtritts mit einzelner Schaltschicht hergestellt.

Es werden für die Vorrichtung in den beiden Schaltzuständen die folgenden Werte für den Lichttransmissionsgrad $\tau_v$ erhalten:

$\tau_{v\ hell}$ = 82 %
$\tau_{v\ dunkel}$ = 48 %.

Zusätzlich wird mit dieser Mischung, wie ebenfalls oben unter 1) angegeben, eine Vorrichtung zur Regulierung des Lichtdurchtritts mit doppelter Schaltschicht hergestellt.

Es werden für die Vorrichtung in den beiden Schaltzuständen die folgenden Werte für den Lichttransmissionsgrad $\tau_v$ erhalten:

$\tau_{v\ hell}$ = 68 %
$\tau_{v\ dunkel}$ = 12 %.

## Patentansprüche

1. Verbindung der Formel (I)

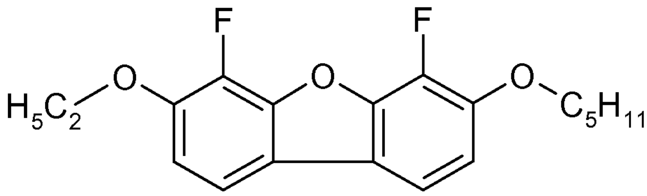

(I).

2. Verwendung der Verbindung gemäß Anspruch 1 in einem flüssigkristallinen Material.

3. Flüssigkristallines Material, enthaltend die Verbindung gemäß Anspruch 1 und zusätzlich eine oder mehrere mesogene Verbindungen.

4. Flüssigkristallines Material gemäß Anspruch 3, wobei das flüssigkristalline Material eine dielektrische Anisotropie $\Delta\varepsilon$ von -2 bis -10 aufweist.

5. Flüssigkristallines Material gemäß Anspruch 3 oder 4, wobei das flüssigkristalline Material zusätzlich eine Farbstoffverbindung aufweist.

6. Flüssigkristallines Material gemäß einem oder mehreren der Ansprüche 3 bis 5, wobei das flüssigkristalline Material einen Klärpunkt von mindestens 95°C hat.

7. Flüssigkristallines Material gemäß einem oder mehreren der Ansprüche 3 bis 6, wobei das flüssigkristalline Material mindestens eine Verbindung V enthält, die mindestens eine Einheit gewählt aus Einheiten der Formeln (E-1), (E-2) und (E-3) umfasst

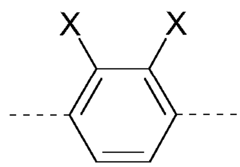

Formel (E-1)

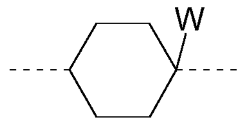

Formel (E-2)

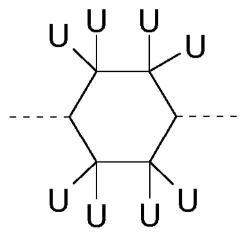

Formel (E-3),

wobei

X bei jedem Auftreten gleich oder verschieden gewählt ist aus F, Cl, Br, I, -CN, -NCO, -NCS, -SCN, -OCN, -NC, -CNO, -CNS und $N_3$;
W bei jedem Auftreten gleich oder verschieden gewählt ist aus F, Cl, Br, I, -CN, -NCO, -NCS, -SCN, -OCN, -NC, -CNO, -CNS und $N_3$;
U bei jedem Auftreten gleich oder verschieden gewählt ist aus H, F, Cl, Br, I, CN, -NCO, -NCS, -SCN, -OCN, -NC, -CNO, -CNS, $N_3$, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können;

gestrichelte Linien Bindungen an den Rest der Verbindung symbolisieren,
und mindestens eine Gruppe U je Einheit der Formel (E-3) gewählt ist aus F, Cl, Br, I, CN, -NCO, -NCS, -SCN, -OCN, -NC, -CNO, -CNS und $N_3$.

**8.** Flüssigkristallines Material gemäß Anspruch 7, wobei die Verbindung V eine Struktur gemäß der folgenden Formel aufweist

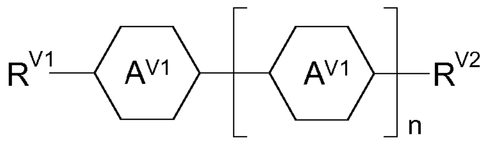

Formel (V),

wobei

$R^{V1}$,$R^{V2}$ bei jedem Auftreten gleich oder verschieden eine Alkyl- oder Alkoxygruppe mit 1 bis 10 C-Atomen oder

eine Alkenyl- oder Alkenyloxygruppe mit 2 bis 10 C-Atomen darstellt, wobei ein oder mehrere Wasserstoffatome in den oben genannten Gruppen durch F oder Cl ersetzt sein können, und eine oder mehrere $CH_2$-Gruppen durch O oder S ersetzt sein können;

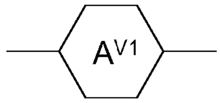

bei jedem Auftreten gleich oder verschieden ausgewählt ist aus den folgenden Gruppen

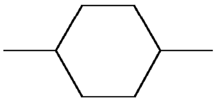
,
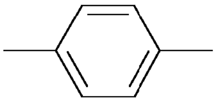
,
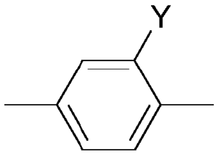
,

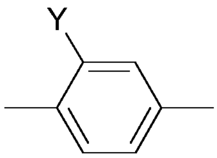
,
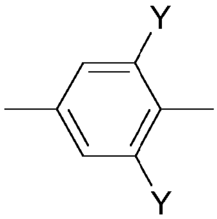
,

oder Einheiten der Formel (E-1), (E-2) oder (E-3);
Y bei jedem Auftreten gleich oder verschieden gewählt ist aus F, Cl, CN, und Alkyl-, Alkoxy- oder Alkylthiogruppen mit 1 bis 10 C-Atomen, wobei ein oder mehrere Wasserstoffatome in den Alkyl-, Alkoxy- oder Alkylthiogruppen durch F oder Cl ersetzt sein können, und wobei eine oder mehrere $CH_2$-Gruppen in den Alkyl-, Alkoxy- oder Alkylthiogruppen durch O oder S ersetzt sein können;
n gleich 1, 2 oder 3 ist; und

wobei mindestens eine der Gruppen

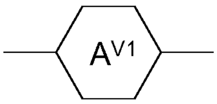

gewählt ist aus Einheiten der Formel (E-1), (E-2) oder (E-3).

**9.** Verwendung des flüssigkristallinen Materials gemäß einem oder mehreren der Ansprüche 3 bis 8 in einer elektrooptischen Vorrichtung.

**10.** Vorrichtung zur Regulierung des Lichtdurchtritts, umfassend eine Schicht, welche das flüssigkristalline Material gemäß einem oder mehreren der Ansprüche 3 bis 8 enthält.

**11.** Vorrichtung gemäß Anspruch 10, wobei das flüssigkristalline Material mindestens drei verschiedene Farbstoffverbindungen enthält.

## Claims

**1.** Compound of the formula (I)

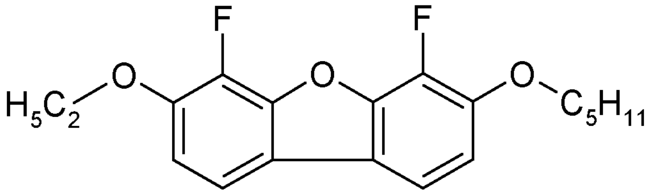

(I).

2. Use of the compound according to Claim 1 in a liquid-crystalline material.

3. Liquid-crystalline material comprising the compound according to Claim 1 and in addition one or more mesogenic compounds.

4. Liquid-crystalline material according to Claim 3, where the liquid-crystalline material has a dielectric anisotropy $\Delta\varepsilon$ of -2 to -10.

5. Liquid-crystalline material according to Claim 3 or 4, where the liquid-crystalline material additionally comprises a dye compound.

6. Liquid-crystalline material according to one or more of Claims 3 to 5, where the liquid-crystalline material has a clearing point of at least 95°C.

7. Liquid-crystalline material according to one or more of Claims 3 to 6, where the liquid-crystalline material comprises at least one compound V which contains at least one unit selected from units of the formulae (E-1), (E-2) and (E-3)

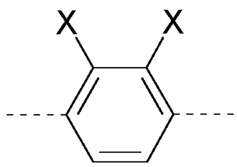

formula (E-1)

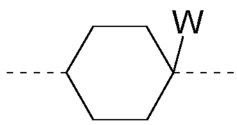

formula (E-2)

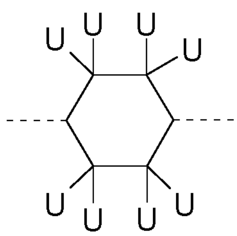

formula (E-3),

where

X is selected on each occurrence, identically or differently, from F, Cl, Br, I, -CN, -NCO, -NCS, -SCN, -OCN, -NC, -CNO, -CNS and $N_3$;
W is selected on each occurrence, identically or differently, from F, Cl, Br, I, -CN, -NCO, -NCS, -SCN, -OCN, -NC, -CNO, -CNS and $N_3$;

U is selected on each occurrence, identically or differently, from H, F, Cl, Br, I, CN, -NCO, -NCS, -SCN, -OCN, -NC, -CNO, -CNS, $N_3$, and alkyl, alkoxy or alkylthio groups having 1 to 10 C atoms, where one or more hydrogen atoms in the alkyl, alkoxy or alkylthio groups may be replaced by F or Cl, and where one or more $CH_2$ groups in the alkyl, alkoxy or alkylthio groups may be replaced by O or S;

dashed lines symbolise bonds to the remainder of the compound,
and at least one group U per unit of the formula (E-3) is selected from F, Cl, Br, I, CN, -NCO, -NCS, -SCN, -OCN, -NC, -CNO, -CNS and $N_3$.

**8.** Liquid-crystalline material according to Claim 7, where the compound V has a structure of the following formula:

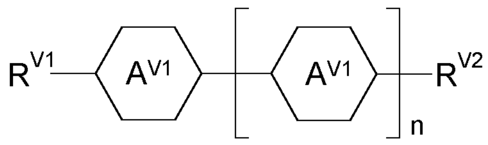

formula (V),

where

$R^{V1}$,$R^{V2}$ on each occurrence, identically or differently, represent an alkyl or alkoxy group having 1 to 10 C atoms or an alkenyl or alkenyloxy group having 2 to 10 C atoms, where one or more hydrogen atoms in the above-mentioned groups may be replaced by F or Cl, and one or more $CH_2$ groups may be replaced by O or S;

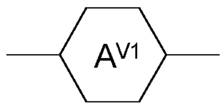

is selected on each occurrence, identically or differently, from the following groups:

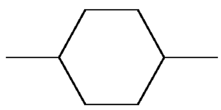 , 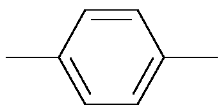 , 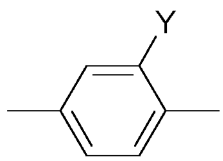 ,

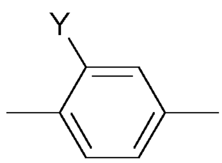 , 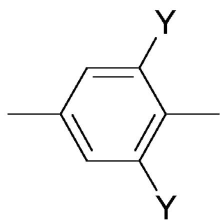 ,

or units of the formula (E-1), (E-2) or (E-3);
Y is selected on each occurrence, identically or differently, from F, Cl, CN, and alkyl, alkoxy or alkylthio groups having 1 to 10 C atoms, where one or more hydrogen atoms in the alkyl, alkoxy or alkylthio groups may be replaced by F or Cl, and where one or more $CH_2$ groups in the alkyl, alkoxy or alkylthio groups may be replaced by O or S;
n is equal to 1, 2 or 3; and

where at least one of the groups

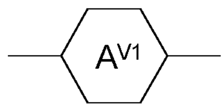

is selected from units of the formula (E-1), (E-2) or (E-3).

9. Use of the liquid-crystalline material according to one or more of Claims 3 to 8 in an electro-optical device.

10. Device for regulating the passage of light, which includes a layer comprising the liquid-crystalline material according to one or more of Claims 3 to 8.

11. Device according to Claim 10, where the liquid-crystalline material comprises at least three different dye compounds.

**Revendications**

1. Composé de la formule (I)

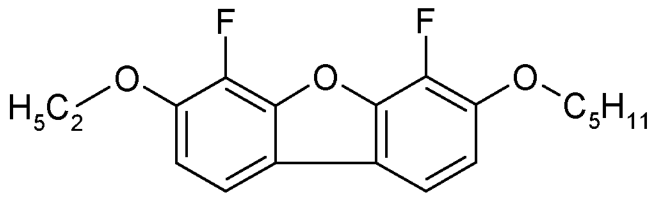

(I).

2. Utilisation du composé selon la revendication 1 dans un matériau cristallin liquide.

3. Matériau cristallin liquide comprenant le composé selon la revendication 1 et en plus, un ou plusieurs composé(s) mésogène(s).

4. Matériau cristallin liquide selon la revendication 3, dans lequel le matériau cristallin liquide présente une anisotropie diélectrique $\Delta\varepsilon$ de -2 à -10.

5. Matériau cristallin liquide selon la revendication 3 ou 4, dans lequel le matériau cristallin liquide comprend de façon additionnelle un composé de colorant.

6. Matériau cristallin liquide selon une ou plusieurs des revendications 3 à 5, dans lequel le matériau cristallin liquide présente un point de clarification d'au moins 95 °C.

7. Matériau cristallin liquide selon une ou plusieurs des revendications 3 à 6, dans lequel le matériau cristallin liquide comprend au moins un composé V qui contient au moins une unité qui est sélectionnée parmi les unités des formules (E-1), (E-2) et (E-3)

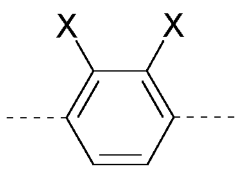

formule (E-1)

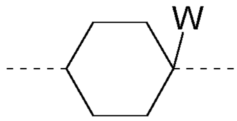

formule (E-2)

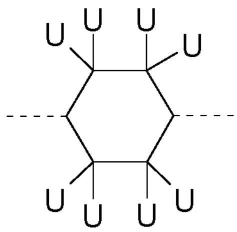

formule (E-3),

dans lesquelles

X est sélectionné pour chaque occurrence, de manière identique ou différente, parmi F, Cl, Br, I, -CN, -NCO, -NCS, -SCN, -OCN, -NC, -CNO, -CNS et $N_3$;
W est sélectionné pour chaque occurrence, de manière identique ou différente, parmi F, Cl, Br, I, -CN, -NCO, -NCS, -SCN, -OCN, -NC, -CNO, -CNS et $N_3$;
U est sélectionné pour chaque occurrence, de manière identique ou différente, parmi H, F, Cl, Br, I, CN, -NCO, -NCS, -SCN, -OCN, -NC, -CNO, -CNS, $N_3$, et les groupes alkyle, alcoxy ou alkylthio qui comportent de 1 à 10 atome(s) de C, où un ou plusieurs atome(s) d'hydrogène dans les groupes alkyle, alcoxy ou alkylthio peut/peuvent être remplacé(s) par F ou par Cl, et où un ou plusieurs groupe(s) $CH_2$ dans les groupes alkyle, alcoxy ou alkylthio peut/peuvent être remplacé(s) par O ou par S ;

les lignes en pointillés symbolisent les liaisons sur le reste du composé,
et au moins un groupe U par unité de la formula (E-3) est sélectionné parmi F, Cl, Br, I, CN, -NCO, -NCS, -SCN, -OCN, -NC, -CNO, -CNS et $N_3$.

**8.** Milieu cristallin liquide selon la revendication 7, dans lequel le composé V présente une structure de la formule qui suit :

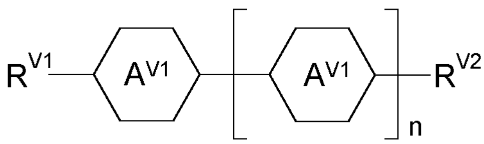

formule (V),

dans laquelle

$R^{V1}$,$R^{V2}$ représentent pour chaque occurrence, de manière identique ou différente, un groupe alkyle ou alcoxy qui comporte de 1 à 10 atome(s) de C ou un groupe alkényle ou alkényloxy qui comporte de 2 à 10 atomes de C, où un ou plusieurs atome(s) d'hydrogène dans les groupes qui ont été mentionnés ci-avant peut/peuvent être remplacé(s) par F ou par Cl, et un ou plusieurs groupe(s) $CH_2$ peut/peuvent être remplacé(s) par O ou par S ;

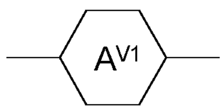

est sélectionné pour chaque occurrence, de manière identique ou différente, parmi les groupes qui suivent :

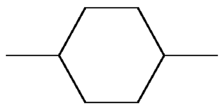 , 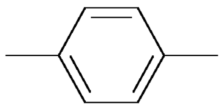 , 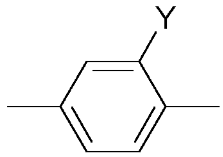 ,

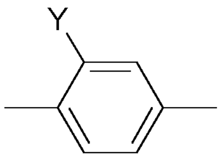 , 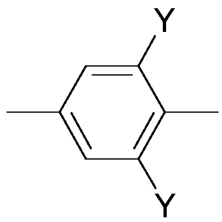 ,

ou les unités de la formule (E-1), (E-2) ou (E-3) ;
Y est sélectionné pour chaque occurrence, de manière identique ou différente, parmi F, Cl, CN, et les groupes alkyle, alcoxy ou alkylthio qui comportent de 1 à 10 atome(s) de C, dans lesquels un ou plusieurs atome(s) d'hydrogène dans les groupes alkyle, alcoxy ou alkylthio peut/peuvent être remplacé(s) par F ou par Cl, et dans lesquels un ou plusieurs groupe(s) $CH_2$ dans les groupes alkyle, alcoxy ou alkylthio peut/peuvent être remplacé(s) par O ou par S ;
n est égal à 1, 2 ou 3 ; et

où au moins l'un des groupes

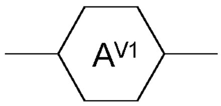

est sélectionné parmi les unités de la formule (E-1), (E-2) ou (E-3).

**9.** Utilisation du matériau cristallin liquide selon une ou plusieurs des revendications 3 à 8 dans un dispositif électro-optique.

**10.** Dispositif pour réguler le passage de la lumière, lequel inclut une couche qui comprend le matériau cristallin liquide selon une ou plusieurs des revendications 3 à 8.

**11.** Dispositif selon la revendication 10, dans lequel le matériau cristallin liquide comprend au moins trois composés de couleur différents.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009141295 A
- WO 2014090367 A
- WO 2014090373 A
- US 2004124399 A1
- DE 102006036184 A1
- EP 34832 A
- EP 44893 A
- EP 48583 A
- EP 54217 A
- EP 56492 A
- EP 59036 A
- GB 2065158 A
- GB 2065695 A
- GB 2081736 A
- GB 2082196 A
- GB 2094822 A
- GB 2094825 A
- JP OS55123673 A
- DE 3017877
- DE 3040102
- DE 3115147
- DE 3115762
- DE 3150803
- DE 3201120
- DE 3126108
- DE 3202761
- EP 43904 A
- DE 3123519
- WO 822054 A
- GB 2079770 A
- JP OS5657850 A
- JP OS56104984 B
- US 4308161 A
- US 4308162 A
- US 4340973 A
- EP 60895 A
- EP 68427 A
- WO 821191 A
- DE 3307238
- EP 2166040 A
- US 20110042651 A
- EP 47027 A
- DE 3110960
- EP 698649 A
- EP 13002711
- US 7038745 B
- US 6099758 A
- US 20110043732 A
- US 7023602 B
- WO 2012052100 A
- EP 13002445


### In der Beschreibung aufgeführte Nicht-Patentliteratur


- **B. BAHADUR.** Liquid Crystals - Applications and Uses. World Scientific Publishing, 1992, vol. 3
- **T. UCHIDA ; C. SHISHIDO ; H. SEKI ; M. WADA.** *Mol. Cryst. Liq. Cryst.,* 1977, vol. 39, 39-52
- **H. SEKI ; C. SHISHIDO ; S. YASUI ; T. UCHIDA.** *Jpn. J. Appl. Phys.,* 1982, vol. 21, 191-192
- Merck Liquid Crystals, Physical Properties of Liquid Crystals. *Merck KGaA,* November 1997
- **D. S. KLIGER et al.** Polarized Light in Optics and Spectroscopy. Academic Press, 1990